# EUROPÄISCHE PATENTSCHRIFT

(11) **EP 3 408 308 B1**
(45) Veröffentlichungstag und Bekanntmachung des Hinweises auf die Patenterteilung: **18.03.2020**
(21) Anmeldenummer: 17702048.4
(22) Anmeldetag: 25.01.2017
(51) Int. Cl.: C08G 63/181, C08G 63/78

(54) **VERFAHREN ZUR HERSTELLUNG FURAN-BASIERTER POLYESTER**
METHOD FOR PRODUCING FURANE- BASED POLYESTER
PROCEDE DE FABRICATION DE POLYESTER A BASE DE FURANE

(30) Priorität: 26.01.2016 EP 16152737
(43) Veröffentlichungstag der Anmeldung: 05.12.2018
(73) Patentinhaber: BASF SE, 67056 Ludwigshafen (DE)
(72) Erfinder: MOLAWI, Kian, 67056 Ludwigshafen (DE)
(86) Internationale Anmeldenummer: PCT/EP2017/051485
(87) Internationale Veröffentlichungsnummer: WO 2017/129584

(56) Entgegenhaltungen:
- WO-A1-2009/135921
- US-A1- 2013 071 588
- US-A1- 2015 057 424

## Beschreibung

Die vorliegende Erfindung betrifft ein Verfahren zur Herstellung eines Polyesters, umfassend die Umsetzung a) einer Furandicarbonsäure-Komponente (A), die mindestens einen Dialkylester einer Furandicarbonsäure umfasst, b) einer Dicarbonsäure-Komponente (B), die mindestens eine aliphatische Dicarbonsäure oder deren Dialkylester oder deren Anhydrid umfasst, c) einer Alkohol-Komponente (C), die mindestens 1,4-Butandiol umfasst, sowie d) eines Katalysators (D); einen Polyester, der durch dieses Verfahren erhältlich ist sowie die Verwendung dieser Polyester zur Herstellung von Folien, Verpackungen, Behältern, geschäumten Produkten, Fasern oder Verbundstoffen.

Verfahren zur Herstellung von Polyestern sowie deren Verwendung zur Herstellung von Polyurethanen sind an sich bekannt. Durch die Begrenztheit fossiler Rohstoffe erlangt die Herstellung von Polyestern aus nachwachsenden Rohstoffen eine immer größer werdende Bedeutung. Diese basieren beispielsweise auf Furandicarbonsäuren. Weiterhin werden diese als Ersatz für auf Terephthalsäure basierenden Polyestern verwendet, die schwerer biologisch abbaubar sind.

So beschreiben Wu, Linbo et al., Biomacromolecules 2012, Band 13, Nr. 9, Seiten 2973 bis 2981, ein hochmolekulares Polybutylensuccinatbutylenfurandicarboxylat, bei dessen Herstellungsverfahren nach der Veresterungsreaktion zur Polykondensation La(acac)₃ zugeführt wird. Der Entstehung von Tetrahydrofuran (THF) in einer Nebenreaktion wird begegnet durch die Verwendung des Katalysators Tetrabutyltitanat, einer Erhöhung des Diol/Disäure-Verhältnisses auf 2,5:1 und einer Erniedrigung der Reaktionstemperatur während der Veresterungsreaktion, sowie der Verwendung des Katalysators Lanthan (III) Acetylacetonhydrat und der Veränderung der Reaktionstemperatur während der Polykondensationsreaktion. Die Verwendung von 2,5-Furandicarbonsäure anstelle der entsprechenden Dialkylfurandicarboxylate wird vorgezogen, da entstehende Nebenprodukte in der industriellen Produktion leichter abgetrennt werden können.

Wu, Binshuang et al., Polymer 2014, Band 55, Nr. 16, Seiten 3648 bis 3655 beschreiben die Herstellung von biobasiertem Polybutylen-2,5-furandicarboxylat und Polybutylenadipat-butylen-2,5-furandicarboxylat, wobei nach der Veresterungsreaktion zur Polykondensation ebenfalls La(acac)₃ zugeführt wird. Die Entstehung von THF wird reduziert durch das Erhöhen des Diol/Disäure Verhältnisses auf 2,5:1.

WO 2013/149221 A1 beschreibt einen Gegenstand enthaltend ein Substrat, welches eine erste und eine zweite Oberfläche umfasst, wobei die zweite Oberfläche in Kontakt zur äußeren Umgebung steht, und wobei das Substrat ein Polymer enthält, welches Polytrimethylenfurandicarboxylat umfasst. Aliphatische Dicarbonsäuren, jedoch nicht deren Ester, werden als optionaler Bestandteil des Polyesters genannt.

WO 2013/149222 A1 beschreibt eine Faser enthaltend ein Polymer, welches Polyalkylenfurandicarboxylat enthält, das durch die Polymerisation einer Mischung umfassend Furandicarbonsäure und ein C2 bis C12 aliphatisches Diol erhalten wird. Als Bestandteil des Polyesters werden aliphatische Säuren, jedoch nicht deren Ester genannt.

WO 2009/135921 A1 offenbart bioabbaubare Polyester vom aliphatisch-aromatischen Typ aus aliphatischen Dicarbonsäuren, Diolen und polyfunktionalen aromatischen Säuren, dadurch gekennzeichnet, dass die aromatische Säure eine Dicarbonsäure erneuerbaren Ursprungs ist. Als optionaler Bestandteil des Polyesters werden aliphatische Dicarbonsäuren, jedoch nicht deren Dialkylester genannt.

Eine unerwünschte Nebenreaktion von Butandiol in saurem Medium ist die Reaktion zu Tetrahydrofuran. Diese tritt bei der Polymerisation mit Furandicarbonsäure in Gegenwart einer aliphatischen Säure dominierend auf und findet beschleunigt statt. Dies führt zur unerwünschten Bildung von Polymeren mit einer geringen molaren Masse. Dem Problem wird im bisherigen Stand der Technik u.a. dadurch begegnet, dass der Reaktion ein starker Überschuss an der flüchtigen Diol-Komponente, beispielsweise Butandiol, zugesetzt wird. Dies führt zwar zu der Bildung von Polymeren mit höheren molaren Massen, jedoch auch zu starken Überschüssen an Butandiol und THF im Endprodukt, die zusätzlich entfernt werden müssen, was wiederum zusätzliche und umfangreiche Aufreinigungsschritte erfordert.

Ein weiterer Nachteil der im Stand der Technik genannten Verfahren zur Synthese von Polyestern besteht darin, dass einzelne Komponenten der Reaktionsmischung erst im Verlauf des Verfahrens hinzugegeben werden. Diese Verfahren sind dadurch aufwendiger und nehmen mehr Zeit und Energie in Anspruch als Verfahren, bei denen sämtliche Komponenten der Reaktionsmischung gemeinsam vorgelegt und umgesetzt werden.

Bei der Verwendung der Polyester zur Herstellung von Polyurethanen ist es zudem besonders wichtig, dass die eingesetzten Polyester eine niedrige Säurezahl besitzen. Polyester mit hohen Säurezahlen führen zu Polyurethanen mit einem geringeren Molekulargewicht, während Polyester mit niedrigen Säurezahlen zu Polyurethanen mit einem hohen Molekulargewicht führen.

Die Aufgabe der vorliegenden Erfindung ist daher die Bereitstellung eines verbesserten Verfahrens zur Synthese von Furan-basierten aliphatischen-aromatischen Polyestern mit einem ausgeglichenen Verhältnis an Hydroxy- und Säurezahl, bei dem unerwünschte Nebenreaktionen und die Entstehung von Tetrathydrofuran erheblich verringert werden, ohne dass zusätzliche Arbeitsschritte durchgeführt werden müssen. Anstelle eines hohen Überschusses von Butandiol soll nur ein geringer Überschuss an Butandiol hinzugegeben werden, was die abschließende Aufreinigung des Endprodukts deutlich verkürzt. Gleichzeitig sollen die im Stand der Technik bekannten Verfahren wirtschaftlich günstiger gestaltet werden.

Die Aufgabe wird gelöst durch ein Verfahren zur Herstellung eines Polyesters, umfassend die Umsetzung
a) einer Furandicarbonsäure-Komponente (A), die mindestens einen Dialkylester einer Furandicarbonsäure umfasst,
b) einer Dicarbonsäure-Komponente (B), die mindestens eine aliphatische Dicarbonsäure oder deren Dialkylester oder deren Anhydrid umfasst,
c) einer Alkohol-Komponente (C), die mindestens 1,4-Butandiol umfasst, sowie
d) einer Katalysator-Komponente (D), umfassend mindestens einen Katalysator,
dadurch gekennzeichnet, dass die Komponenten (A), (B), (C) und (D) gleichzeitig umgesetzt werden.

Es wurde gefunden, dass Polyester mit hohen Molmassen und einer niedrigen Summe aus Hydroxylzahl und Säurezahl hergestellt werden können, wobei die Hydroxylzahl bevorzugt größer ist als die Säurezahl.

Zudem wurde gefunden, dass die Komponenten (A), (B), (C) und (D) gleichzeitig umgesetzt werden können ohne, dass dies zur Bildung von Polymeren mit geringem Molekulargewicht führt.

Es wurde weiterhin gefunden, dass durch die Verwendung von Estern der aliphatischen Dicarbonsäuren anstelle der freien Disäure die unerwünschte Nebenreaktion des Butandiols zu Tetrathydrofuran vermieden wird.

Diese Eigenschaften wirken sich positiv auf die weitere Vernetzung mit Isocyanaten aus und sind somit beispielsweise sehr gut zur Synthese von Polyurethanen mit einem hohen Molekulargewicht geeignet. Gleichzeitig steigt die Viskosität der erfindungsgemäßen bzw. erfindungsgemäß erhältlichen Polyester an.

Darüber hinaus besteht ein weiterer Vorteil der vorliegenden Polyester darin, dass sie im Allgemeinen biologischen abbaubar sind.

### Komponente A

Erfindungsgemäß werden als Furandicarbonsäure-Komponente (A) Dialkylester der Furandicarbonsäure verwendet.

Geeignete Furandicarbonsäuren sind beispielsweise 2,5-Furandicarbonsäure, 2,4-Furandicarbonsäure, 3,4-Furandicarbonsäure oder 2,3-Furandicarbonsäure oder deren Derivate. Derivate der Furandicarbonsäure im Sinne der vorliegenden Erfindung bedeutet, dass die Wasserstoffatome an den Ringpositionen ohne Carboxygruppe unabhängig voneinander ersetzt werden können durch C1 bis C25 unverzweigte, verzweigte oder cyclische Alkylgruppen, welche 1 bis 3 Heteroatome aus der Gruppe O, N, Si und S enthalten können und optional funktionelle Gruppen wie beispielsweise -Cl, -Br, -F, -I, -OH, -NH₂ oder -SH enthalten können.

Die genannten Furandicarbonsäuren können erfindungsgemäß einzeln oder in einer Mischung aus mehreren Furandicarbonsäuren verwendet werden.

Bevorzugt werden 2,5-Furandicarbonsäure oder deren Derivate, besonders bevorzugt wird 2,5-Furandicarbonsäure verwendet.

Geeignete Dialkylester der Furandicarbonsäure sind die, bei denen die Carboxygruppen mit aliphatischen, cycloaliphatischen, aromatischen, heteroaromatischen oder heterocyclischen einwertigen Alkoholen verestert sind. Im Allgemeinen weisen die einwertigen Alkohole bei Atmosphärendruck einen Siedepunkt von 60 bis 250°C und bevorzugt 60 bis 235°C auf, sodass sie gemeinsam mit Butandiol abdestilliert werden können.

Die einwertigen Alkohole enthalten im Allgemeinen 1 bis 14 Kohlenstoffatome, bevorzugt 1 bis 10 Kohlenstoffatome, besonders bevorzugt 1 bis 8 Kohlenstoffatome, ganz besonders bevorzugt 1 bis 5 Kohlenstoffatome und insbesondere bevorzugt 1 bis 2 Kohlenstoffatome.

Bevorzugt sind lineare oder verzweigte aliphatische oder cycloaliphatische einwertige Alkohole mit 1 bis 14 Kohlenstoffatomen, bevorzugt 1 bis 10 Kohlenstoffatomen und besonders bevorzugt 1 bis 8 Kohlenstoffatomen, heterocyclische einwertige Alkohole mit 1 bis 12 Kohlenstoffatomen oder aromatische oder heteroaromatische einwertige Alkohole mit 1 bis 12 Kohlenstoffatomen.

Bevorzugt werden Alkanole, Alkenole, Phenole, Cyclohexanole oder Cyclopentanole als einwertige Alkohole zur Veresterung der Furandicarbonsäure verwendet.

Beispiele für geeignete einwertige Alkohole sind Methanol, Ethanol, Propanol, Butanol, Phenol, Cyclopentanol oder Cyclohexanol. Bevorzugt werden Methanol, Ethanol oder Phenol verwendet. Besonders bevorzugt wird Methanol zur Veresterung der Furandicarbonsäure verwendet.

Zur Veresterung der Furandicarbonsäure können die genannten einwertigen Alkohole erfindungsgemäß einzeln oder in einer Mischung aus mehreren einwertigen Alkoholen verwendet werden. Das bedeutet, dass die zwei Säuregruppen der Furandicarbonsäure mit dem gleichen einwertigen Alkohol und/oder unabhängig voneinander mit unterschiedlichen einwertigen Alkoholen verestert sein können. Bevorzugt sind die zwei Säuregruppen der Furandicarbonsäure mit dem gleichen einwertigen Alkohol verestert.

Im Allgemeinen ist die Furandicarbonsäure der Komponente (A) mit einwertigen Alkoholen basierend auf 1 bis 14 Kohlenstoffatomen, bevorzugt 1 bis 10 Kohlenstoffatomen, besonders bevorzugt 1 bis 8 Kohlenstoffatomen, ganz besonders bevorzugt 1 bis 5 Kohlenstoffatomen und insbesondere bevorzugt 1 bis 2 Kohlenstoffatomen verestert.

Bevorzugt enthält die Furandicarbonsäure-Komponente (A) einen Dimethylester einer Furandicarbonsäure, besonders bevorzugt besteht die Furandicarbonsäure-Komponente (A) aus einem Dimethylester einer Furandicarbonsäure.

Im Allgemeinen enthält die Furandicarbonsäure-Komponente (A) mindestens einen Dialkylester der 2,5-Furandicarbonsäure, bevorzugt enthält die Furandicarbonsäure-Komponente (A) Dimethyl-2,5-furandicarbonsäure und/oder Diethyl-2,5-furandicarbonsäure. Besonders bevorzugt enthält die Furandicarbonsäure-Komponente (A) Dimethyl-2,5-furandicarbonsäure.

Ganz besonders bevorzugt besteht die Furandicarbonsäure-Komponente (A) aus einem Dialkylester der 2,5-Furandicarbonsäure. Insbesondere bevorzugt besteht die Komponente (A) aus Dimethyl-2,5-furandicarbonsäure.

Furandicarbonsäuren, einwertige Alkohole und Dialkylester der Furandicarbonsäure sind im Allgemeinen kommerziell erhältlich oder können aus natürlichen Rohstoffen gewonnen werden. Als natürliche Rohstoffe werden insbesondere Substanzen bezeichnet, die durch Verarbeitung aus Pflanzen, beziehungsweise Teilen von Pflanzen (oder auch Tieren) gewonnen werden. Darüber hinaus können die genannten Furandicarbonsäuren, einwertigen Alkohole und Dialkylester der Furandicarbonsäure durch mikrobiologische Verfahren produziert werden. Diese sind dem Fachmann allgemein bekannt oder beispielsweise beschrieben durch F. Koopman, N. Wierckx, J.H. de Winde und H.J. Ruijssenaars. Bioresource Technology 2010, Band 101, Nr. 16, Seiten 6291 bis 6296.

Die genannten Furandicarbonsäuren sowie Dialkylester der Furandicarbonsäuren können zusätzlich aufgereinigt werden. Verfahren zur Aufreinigung von kommerziell erhältlichen, aus natürlichen Rohstoffen gewonnenen oder durch mikrobiologische Verfahren produzierte Furandicarbonsäuren oder deren Dialkylester sind dem Fachmann allgemein bekannt. Beispielsweise können die genannten Furandicarbonsäuren oder deren Dialkylester durch Kristallisationsverfahren aufgereinigt werden.

### Komponente B

Erfindungsgemäß wird als Dicarbonsäure-Komponente (B) mindestens eine aliphatische Dicarbonsäure oder deren Dialkylester oder deren Anhydrid verwendet.

Im Allgemeinen weisen die Dicarbonsäuren oder deren Anhydride der Dicarbonsäure-Komponente (B) 2 bis 24 Kohlenstoffatome, bevorzugt 2 bis 20 Kohlenstoffatome, besonders bevorzugt 3 bis 13 Kohlenstoffatome und ganz besonders bevorzugt 4 bis 10 Kohlenstoffatome auf.

Bevorzugt sind lineare oder verzweigte aliphatische Dicarbonsäuren mit 2 bis 20 Kohlenstoffatomen, besonders bevorzugt mit 3 bis 13 Kohlenstoffatomen und insbesondere bevorzugt mit 4 bis 10 Kohlenstoffatomen.

Bevorzugt werden Alkandisäuren oder Alkendisäuren verwendet.

Beispiele für geeignete Dicarbonsäuren oder deren Anhydride sind Bernsteinsäure oder deren Anhydrid (Bernsteinsäureanhydrid), Adipinsäure, Sebacinsäure, Glutarsäure, Korksäure, Azelainsäure, Decandicarbonsäure, Dodecandisäure, Octadecandisäure, Maleinsäure, Fumarsäure oder Itaconsäure.

Bevorzugte Dicarbonsäuren der Dicarbonsäure-Komponente (B) sind Bernsteinsäure, Adipinsäure, und/oder Sebacinsäure.

Ein bevorzugtes Anhydrid einer Dicarbonsäure der Dicarbonsäure-Komponente (B) ist Bernsteinsäureanhydrid.

Die genannten Dicarbonsäuren können erfindungsgemäß einzeln oder in einer Mischung aus mehreren Dicarbonsäuren verwendet werden.

Bevorzugt enthält die Dicarbonsäure-Komponente (B) mindestens eine Dicarbonsäure, besonders bevorzugt besteht die Dicarbonsäure-Komponente (B) aus einer oder mehreren Dicarbonsäuren, ganz besonders bevorzugt aus einer Dicarbonsäure, wobei die Dicarbonsäure-Komponente (B) bevorzugt Bernsteinsäure, Adipinsäure und/oder Sebacinsäure enthält.

In einer weiteren Ausführungsform enthält die Dicarbonsäure-Komponente (B) im Allgemeinen mindestens ein Anhydrid einer Dicarbonsäure, bevorzugt besteht die Dicarbonsäure-Komponente (B) aus einem oder mehreren Anhydriden einer Dicarbonsäure, besonders bevorzugt aus einem Anhydrid einer Dicarbonsäure, wobei die Dicarbonsäure-Komponente (B) bevorzugt Bernsteinsäureanhydrid enthält.

Geeignete Dialkylester der Dicarbonsäuren sind die, bei denen die Dicarbonsäure mit aliphatischen, cycloaliphatischen, aromatischen, heteroaromatischen oder heterocyclischen einwertigen Alkoholen verestert ist. Im Allgemeinen weisen die einwertigen Alkohole bei Atmosphärendruck einen Siedepunkt von 60 bis 250°C und bevorzugt 60 bis 235°C auf, sodass sie gemeinsam mit Butandiol abdestilliert werden können.

Die einwertigen Alkohole basieren im Allgemeinen auf 1 bis 14 Kohlenstoffatomen, bevorzugt 1 bis 10 Kohlenstoffatomen, besonders bevorzugt 1 bis 8 Kohlenstoffatomen. Bevorzugt sind lineare oder verzweigte aliphatische oder cycloaliphatische einwertige Alkohole mit 1 bis 14 Kohlenstoffatomen, bevorzugt 1 bis 10 Kohlenstoffatomen, besonders bevorzugt 1 bis 8 Kohlenstoffatomen sowie heterocyclische einwertige Alkohole mit 1 bis 14 Kohlenstoffatomen im cyclischen Gerüst oder aromatische oder heteroaromatische einwertige Alkohole mit 1 bis 14 Kohlenstoffatomen im cyclischen Gerüst.

Bevorzugt werden Alkanole, Alkenole, Hydroxybenzole, Cyclohexanole oder Cyclopentanole als einwertige Alkohole zur Veresterung der Dicarbonsäure verwendet.

Beispiele für geeignete einwertige Alkohole sind Methanol, Ethanol, Propanol, Butanol, Phenol, Cyclopentanol oder Cyclohexanol. Bevorzugt werden Methanol, Ethanol oder Phenol verwendet. Besonders bevorzugt wird Methanol zur Veresterung der Dicarbonsäure verwendet.

Zur Veresterung der Dicarbonsäure können die genannten einwertigen Alkohole erfindungsgemäß einzeln oder in einer Mischung aus mehreren einwertigen Alkoholen verwendet werden. Das bedeutet, dass die zwei Säuregruppen der Dicarbonsäure mit den gleichen einwertigen Alkoholen und/oder unabhängig voneinander mit unterschiedlichen einwertigen Alkoholen verestert sein können. Bevorzugt sind die zwei Säuregruppen der Dicarbonsäure mit dem gleichen einwertigen Alkohol verestert.

Die Dicarbonsäure-Komponente (B) kann im Allgemeinen auch Monoalkylester aus den oben genannten Dicarbonsäuren und einwertigen Alkoholen enthalten.

Bevorzugt enthält die Dicarbonsäure-Komponente (B) mindestens einen Dialkylester, besonders bevorzugt besteht die Dicarbonsäure-Komponente (B) aus einem oder mehreren Dialkylestern, ganz besonders bevorzugt aus einem Dialkylester, wobei die Dicarbonsäure-Komponente (B) bevorzugt Dimethyl- und/oder Diethylester der Bernsteinsäure, Adipinsäure und/oder Sebacinsäure, besonders bevorzugt Dimethyester der Bernsteinsäure, Adipinsäure und/oder Sebacinsäure enthält.

Die genannten Dicarbonsäuren, einwertigen Alkohole, Monoalkylester und Dialkylester der Dicarbonsäure sowie Anhydride der Dicarbonsäure sind kommerziell erhältlich oder können aus natürlichen Rohstoffen gewonnen werden. Als natürliche Rohstoffe werden insbesondere Substanzen bezeichnet, die durch Verarbeitung aus Pflanzen, beziehungsweise Teilen von Pflanzen (oder auch Tieren) gewonnen werden. Darüber hinaus können die genannten Dicarbonsäuren, einwertigen Alkohole, Monoalkylester und Dialkylester der Dicarbonsäure sowie Anhydride der Dicarbonsäure durch mikrobiologische Verfahren produziert werden. Diese sind dem Fachmann allgemein bekannt oder beispielsweise analog zu F. Koopman, N. Wierckx, J.H. de Winde und H.J. Ruijssenaars. Bioresource Technology 2010, Band 101, Nr. 16, Seiten 6291 bis 6296.

Das Molverhältnis der Furandicarbonsäure-Komponente (A) zur Dicarbonsäure-Komponente (B) beträgt im Allgemeinen 40:60 bis 95:5, bevorzugt 50:50 bis 90:10, besonders bevorzugt 60:40 bis 80:20 und ganz besonders bevorzugt 65:35 bis 75:25.

### Komponente C

Die erfindungsgemäße Alkohol-Komponente (C) umfasst mindestens 1,4-Butandiol.

Geeignete zusätzliche Alkohole sind im Allgemeinen Alkohole mit mindestens zwei Hydroxygruppen, d.h. Diole, Triole oder Polyole. Im Allgemeinen weisen diese Alkohole bei Atmosphärendruck einen Siedepunkt von 60 bis 250°C und bevorzugt 60 bis 235°C auf, sodass sie gemeinsam mit Butandiol abdestilliert werden können. Bevorzugt werden Di- oder Triole und besonders bevorzugt Triole verwendet. Erfindungsgemäß geeignet sind beispielsweise C2 bis C12 Alkohole, d.h. Alkohole mit 2 bis 12 Kohlenstoffatomen, bevorzugt C2 bis C10 Alkohole und ganz besonders bevorzugt C2 bis C8 Alkohole.

Erfindungsgemäß geeignete Diole sind im Allgemeinen aliphatische, cycloaliphatische oder aromatische Diole, Polyester Diole oder Polyether Diole, bevorzugt aliphatische Diole. Geeignete aliphatische Diole sind dem Fachmann allgemein bekannt und umfassen beispielsweise 1,2-Butandiol, 1,3-Butandiol, 2,3-Butandiol, 2,2-Dimethyl-1,3-propandiol, Ethylenglykol, Diethylenglykol, 3-Oxapentan-1,5-diol, 1,3-Propandiol, 1,2-Propandiol, Dipropylenglycol, 1,4-Butandiol, 1,5-Pentandiol, 1,6-Hexandiol, 2-Methyl-1,3-propandiol und 3-Methyl-1,5-pentandiol, 2-Butyl-2-ethyl-1,3-propandiol, Cyclohexandimethanol oder 2-Ethyl-1,3-Hexandiol. Bevorzugt werden neben Butandiol mindestens 2,2-Dimethyl-1,3-propandiol, 2-Butyl-2-ethyl-1,3-propandiol, Cyclohexandimethanol und/ oder 2-Ethyl-1,3-Hexandiol verwendet. Besonders bevorzugt wird neben Butandiol mindestens 2,2-Dimethyl-1,3-propandiol und ganz besonders bevorzugt wird neben Butandiol ausschließlich 2,2-Dimethyl-1,3-propandiol verwendet.

Geeignete Triole sind im Allgemeinen aliphatische, cycloaliphatische oder aromatische Triole, Polyester Triole oder Polyether Triole, wie z.B. Glycerin, Trimethylolpropan, 1,2,3-Trihydroxybenzol, 1,2,4-Trihydroxybenzol oder 1,3,5-Trihydroxybenzol. Bevorzugt wird Glycerin verwendet.

In einer bevorzugten Ausführungsform enthält die Alkohol-Komponente (C) neben 1,4-Butandiol mindestens ein weiteres C2 bis C8 Triol, bevorzugt mindestens Glycerin, Trimethylolpropan, 1,2,3-Trihydroxybenzol, 1,2,4-Trihydroxybenzol oder 1,3,5-Trihydroxybenzol, besonders bevorzugt mindestens Glycerin.

In einer insbesondere bevorzugten Ausführungsform besteht die Diol-Komponente C aus 1,4-Butandiol und Glycerin.

Bei Polyolen als Bestandteil der Alkohol-Komponente (C) handelt es sich im Sinne der Erfindung um organische Verbindungen mit mindestens vier Hydroxygruppen. Geeignete Polyole sind im Allgemeinen aliphatische, cycloaliphatische oder aromatische Polyole, wie z.B. Pentaerythrit, sowie Polyester Polyole oder Polyether Polyole (Polyetherole) mit Molekulargewichten zwischen 200 und 6000 g/mol. Bevorzugt werden Polyetherole mit einem Molekulargewicht von 200 bis 3000 g/mol und besonders bevorzugt werden Polyetherole mit einem Molekulargewicht von 200 bis 400 g/mol verwendet.

Auch Mischungen der genannten Di-, Tri- oder Polyole sind erfindungsgemäß geeignet.

1,4-Butandiol sowie die genannten Diole, Triole und Polyole sind kommerziell erhältlich oder können aus natürlichen Rohstoffen gewonnen werden. Als natürliche Rohstoffe werden insbesondere Substanzen bezeichnet, die durch Verarbeitung aus Pflanzen, beziehungsweise Teilen von Pflanzen (oder auch Tieren), oder mikrobiologischen Verfahren, gewonnen werden. Darüber hinaus können Butandiol und die genannten Diole, Triole und Polyole durch mikrobiologische Verfahren produziert werden. Diese sind dem Fachmann allgemein bekannt oder beispielsweise in US 8,357,520 B2 beschrieben oder analog zu diesem Dokument.

Die Komponente C enthält im Allgemeinen mindestens 10 Gew.-% 1,4-Butandiol, bevorzugt 10 bis 100 Gew.-% 1,4-Butandiol, besonders bevorzugt: 50 bis 99,95 Gew.-% 1,4-Butandiol, ganz besonders bevorzugt 75 bis 99,9 Gew.-% 1,4-Butandiol und insbesondere bevorzugt 90 bis 99,82 Gew.-% 1,4-Butandiol basierend auf dem Gesamtgewicht der Komponente C. Der restliche Teil der Komponente C, der kein 1,4-Butandiol enthält, enthält einen oder mehrere der oben genannten Alkohole.

Des Weiteren enthält die Komponente C im Allgemeinen 0,05 bis 0,25 Gew.-% Glycerin, bevorzugt 0,1 bis 0,23 Gew.-% Glycerin, besonders bevorzugt 0,18 bis 0,21 Gew.-% Glycerin basierend auf dem Gesamtgewicht der Komponente C.

Bevorzugt enthält die Alkohol-Komponente (C) 99,75 bis 99,95 Gew.-% 1,4-Butandiol und 0,05 bis 0,25 Gew.-% Glycerin, besonders bevorzugt 99,77 bis 99,9 Gew.-% 1,4-Butandiol und 0,1 bis 0,23 Gew.-% Glycerin und insbesondere bevorzugt 99,79 bis 99,82 Gew.-% 1,4-Butandiol und 0,18 bis 0,21 Gew.-% Glycerin bezogen auf das Gesamtgewicht der Alkohol-Komponente (C).

In einer weiteren Ausführungsform kann die Komponente C aus 1,4-Butandiol bestehen.

In einer bevorzugten Ausführungsform besteht die Komponente C aus 1,4-Butandiol und Glycerin.

Das Molverhältnis der Furandicarbonsäure-Komponente (A) und der Dicarbonsäure-Komponente (B) zu der Alkohol-Komponente (C) beträgt im Allgemeinen 20:80 bis 70:30, bevorzugt 30:70 bis 60:40 und besonders bevorzugt 40:60 bis 50:50.

### Komponente D

Die erfindungsgemäße Katalysator-Komponente (D) umfasst mindestens einen Katalysator.

Geeignete Katalysatoren sind beispielsweise Eisen-, Cadmium-, Kobalt-, Blei-, Zink-, Hafnium-, Zirkonium-, Aluminium-, Antimon-, Magnesium-, Titan- oder Zinnkatalysatoren in Form von Metallen, Metalloxiden oder Metallsalzen, wie metall-organische Verbindungen, oder Säuren z.B. Schwefelsäure oder p-Toluolsulfonsäure, oder Basen, z.B. Kaliumhydroxid oder Natriummethanolat.

Bevorzugt werden Metallsalze wie metall-organische Verbindungen, z.B. Alkoxide von Metallen, verwendet.

Geeignete Zinn(IV) Verbindungen sind im Allgemeinen zinnorganische Verbindungen wie Alkylzinn(IV) Salze, z.B. Monoalkylzinn(IV)-Salze, Dialkylzinn(IV)-Salze oder Trialkylzinn(IV)-Salze. Beispielsweise können Butylzinn(IV)-tris(octoat), Dibutylzinn(IV)-di(octoat), Di-butylzinn(IV)-diacetat, Dibutylzinn(IV)-laurat, Bis(dibutylchlorozinn(IV))-oxid, Dibutylzinndichlorid, Tributylzinn(IV)-benzoat oder Dibutylzinnoxid verwendet werden.

Zu den geeigneten Antimonverbindungen gehört beispielsweise Antimonoxid.

Geeignete Zirkoniumverbindungen sind beispielsweise Zirkonium(IV) Chelatverbindungen oder Zirkonium(IV) Salze wie beispielsweise Alkoxide.

Geeignete Hafniumverbindungen sind beispielsweise Hafnium(IV) Chelatverbindungen oder Hafnium(IV) Salze wie beispielsweise Alkoxide.

Geeignete Titanverbindungen sind beispielsweise titan-organische Verbindungen wie z.B. Titansäureester, wie beispielsweise Titan(IV) Alkoxide, oder Titan(IV) Chelatverbindungen. Geeignete Titansäureester sind beispielsweise Tetraisopropylorthotitanat oder Tetrabutylorthotitanat (TBOT). Bevorzugt wird Tetrabutylorthotitanat (TBOT) verwendet.

Geeignet sind zudem Gemische dieser Katalysatoren.

### Verfahren

Das Verfahren zur Herstellung eines Polyesters, umfassend die Umsetzung
a) einer Furandicarbonsäure-Komponente (A), die mindestens einen Dialkylester einer Furandicarbonsäure umfasst,
b) einer Dicarbonsäure-Komponente (B), die mindestens eine aliphatische Dicarbonsäure oder deren Dialkylester oder deren Anhydrid umfasst,
c) einer Alkohol-Komponente (C), die mindestens 1,4-Butandiol umfasst, sowie
d) einer Katalysator-Komponente (D), umfassend mindestens einen Katalysator,
ist dadurch gekennzeichnet, dass die Komponenten (A), (B), (C) und (D) gleichzeitig umgesetzt werden.

Gleichzeitig umgesetzt bedeutet, dass die Komponenten (A), (B), (C) und (D) vor Reaktionsbeginn vermischt werden und dass die Reaktion in Anwesenheit aller Komponenten (A), (B), (C) und (D) durchgeführt wird. Die Reaktion von zunächst einem Teil der Komponenten aus (A), (B), (C) und (D) gefolgt von der Zugabe der restlichen oder weiterer Komponenten aus (A), (B), (C) und (D) und einer weiteren Reaktion dieser Komponenten wird nicht als gleichzeitige Umsetzung betrachtet.

Bevorzugt umfasst das erfindungsgemäße Verfahren die folgenden Schritte:
i) Herstellung einer Reaktionsmischung enthaltend die folgenden Komponenten:
   a) eine Furandicarbonsäure-Komponente (A), die mindestens einen Dialkylester einer Furandicarbonsäure umfasst,
   b) eine Dicarbonsäure-Komponente (B), die mindestens eine aliphatische Dicarbonsäure oder deren Dialkylester oder deren Anhydrid umfasst, sowie
   c) eine Alkohol-Komponente (C), die mindestens 1,4-Butandiol umfasst,
   d) eine Katalysator-Komponente (D), umfassend mindestens einen Katalysator,
ii) Erhitzen der Reaktionsmischung bis zu einer Innentemperatur von 65 bis 260°C, bevorzugt 70 bis 240 °C, besonders bevorzugt 75 bis 220 °C, ganz besonders bevorzugt 100 bis 200 °C,
iii) Senken des Druckes auf ≤ 5 mbar, bevorzugt auf ≤ 1,5 mbar und besonders bevorzugt auf ≤1 mbar und Erhitzen der Reaktionsmischung bis zu einer Innentemperatur von 65 bis 250°C, bevorzugt 70 bis 240 °C und besonders bevorzugt 80 bis 220 °C, bis die Viskosität des Polymers nicht mehr ansteigt.

### Schritt i)

Die Reaktionsmischung gemäß Schritt i) umfasst im Allgemeinen
a) 25 bis 75 Gew.-%, bevorzugt 35 bis 60 Gew.-% und besonders bevorzugt 40 bis 50 Gew.-% der Furandicarbonsäure-Komponente (A), die mindestens einen Dialkylester einer Furandicarbonsäure umfasst,
b) 5 bis 55 Gew.-%, 10 bis 35 Gew.-% und besonders bevorzugt 15 bis 25 Gew.-% der Dicarbonsäure-Komponente (B), die mindestens eine aliphatische Dicarbonsäure oder deren Dialkylester oder deren Anhydrid umfasst,
c) 20 bis 70 Gew.-%, 30 bis 55 Gew.-% und besonders bevorzugt 35 bis 45 Gew.-% der Alkohol-Komponente (C), die mindestens 1,4-Butandiol umfasst,
   wobei die Gesamtsumme der Komponenten (A), (B) und (C) 100 Gew.-% ergibt, sowie
d) 0,0001 bis 3 Gewichtsteile, bevorzugt 0,001 bis 1 Gewichtsteile und besonders bevorzugt 0,01 bis 0,1 Gewichtsteile der Katalysator-Komponente (D), umfassend mindestens einen Katalysator, bezogen auf 100 Gewichtsteile des Polyesters.

Bevorzugt besteht die Reaktionsmischung gemäß Schritt i) aus
a) 25 bis 75 Gew.-%, bevorzugt 35 bis 60 Gew.-% und besonders bevorzugt 40 bis 50 Gew.-% der Furandicarbonsäure-Komponente (A), die mindestens einen Dialkylester einer Furandicarbonsäure umfasst
b) 5 bis 55 Gew.-%, 10 bis 35 Gew.-% und besonders bevorzugt 15 bis 25 Gew.-% der Dicarbonsäure-Komponente (B), die mindestens eine aliphatische Dicarbonsäure oder deren Dialkylester oder deren Anhydrid umfasst,
c) 20 bis 70 Gew.-%, 30 bis 55 Gew.-% und besonders bevorzugt 35 bis 45 Gew.-% der Alkohol-Komponente (C), die mindestens 1,4-Butandiol umfasst,
   wobei die Gesamtsumme der Komponenten (A), (B) und (C) 100 Gew.-% ergibt, sowie
d) 0,0001 bis 3 Gewichtsteile, bevorzugt 0,001 bis 1 Gewichtsteile und besonders bevorzugt 0,01 bis 0,1 Gewichtsteile der Katalysator-Komponente (D), umfassend mindestens einen Katalysator, bezogen auf 100 Gewichtsteile des Polyesters.

Die einzelnen Komponenten der Reaktionsmischung aus Schritt i) werden vor Reaktionsbeginn in einem Reaktionsgefäß vermischt. Die Reihenfolge des Zusammenmischens der Komponenten ist beliebig. Daher weisen Polyester resultierend aus dem erfindungsgemäßen Verfahren bzw. erfindungsgemäße Polyester im Allgemeinen eine zufällige Anordnung der einzelnen Komponenten auf. Bei dem verwendeten Reaktionsgefäß handelt es sich im Allgemeinen um einen Rührkessel. Bevorzugt wird ein Rührkessel mit einem kontinuierlichen Rührer verwendet. Geeignete Ausführungen des Reaktionsgefäßes und des Rührers sind dem Fachmann allgemein bekannt.

Im Allgemeinen wird nach dem Zusammenmischen der Komponenten der Reaktionsmischung das Reaktionsgefäß mit Inertgas gespült. Inertgas bedeutet, dass das Gas mit keiner der Komponenten der Reaktionsmischung oder deren Produkte und Zwischenprodukte chemisch reagiert. Geeignete Inertgase sind im Allgemeinen Edelgase, wie beispielsweise Argon, oder Stickstoff. Bevorzugt wird Stickstoff als Inertgas verwendet.

Die für diesen Schritt benötigten Apparaturen, zu denen beispielsweise Apparaturen zum Spülen des Reaktionsgefäßes mit Inertgas, zur Herstellung oben genannter Mischungen und zum Vermischen der Komponenten gehören, sind dem Fachmann allgemein bekannt.

### Schritt ii)

Im Allgemeinen werden in Schritt ii) beim Erhitzen der Reaktionsmischung die einwertigen Alkohole der Dialkylester und gegebenenfalls Monoalkylester abgetrennt. Diese Abtrennung erfolgt im Allgemeinen durch Destillation.

Im Allgemeinen wird die Reaktionsmischung bis zu einer Innentemperatur von 65 bis 260°C, bevorzugt 70 bis 240 °C, besonders bevorzugt 75 bis 220 °C und ganz besonders bevorzugt 100 bis 200 °C erhitzt.

Der Druck im Reaktionsgefäß wird im Allgemeinen abhängig von der Temperatur so eingestellt, dass die gewählte Kombination aus Temperatur- und Druckeinstellung zur Abtrennung der einwertigen Alkohole der Dialkylester und gegebenenfalls Monoalkylester führt. Dieses Verfahren ist dem Fachmann allgemein bekannt.

Die für diesen Schritt benötigten Apparaturen, zu denen beispielsweise Apparaturen zum Erhitzen des Reaktionsgemisches und zur Abtrennung von Komponenten, beispielsweise durch Destillation, gehören, sind dem Fachmann allgemein bekannt.

### Schritt iii)

Im Allgemeinen wird in Schritt iii) durch Senken des Druckes und Erhitzen der Reaktionsmischung die Alkohol-Komponente (C), die mindestens 1,4-Butandiol umfasst, abgetrennt. Diese Abtrennung erfolgt im Allgemeinen durch Destillation.

Die für diesen Schritt benötigten Apparaturen, zu denen beispielsweise Apparaturen zum Erhitzen des Reaktionsgemisches, zum Senken des Druckes Erzeugen eines Vakuums und zur Abtrennung von Komponenten gehören, sind dem Fachmann allgemein bekannt.

Im Allgemeinen wird die Polymerschmelze während dieses Schrittes gerührt. Beispielsweise kann dieser Schritt in einem Rührkessel unter kontinuierlichem Rühren erfolgen.

Der Druck im Reaktionsgefäß während des Schrittes iii) wird im Allgemeinen möglichst niedrig eingestellt, um restliches Diol zu entfernen. Im Allgemeinen wird der Druck im Reaktionsgefäß auf ≤ 5 mbar, bevorzugt auf ≤ 1,5 mbar und besonders bevorzugt auf ≤ 1 mbar gesenkt.

Im Allgemeinen wird die Reaktionsmischung bis zu einer Innentemperatur von 65 bis 250°C, bevorzugt 70 bis 240 °C und besonders bevorzugt 80 bis 220 °C erhitzt.

Die Reaktionsbedingungen zur Abtrennung der Alkohol-Komponente (C) werden solange gehalten, bis die Viskosität der Polymerschmelze nicht weiter ansteigt.

Nach Beendigung des Schrittes iii) wird gemäß ISO 1628-5 vom 01.03.1998 die Viskosität bestimmt. Das zu in 0,05 g/ml Lösung in Phenol/Dichlorbenzol (1:1) gelöste Polymer hat im Allgemeinen eine Viskosität von 40 bis 110 mL/g, bevorzugt 50 bis 100 mL/g und besonders bevorzugt 60 bis 90 mL/g.

Das erfindungsgemäße Verfahren umfasst im Allgemeinen mindestens einen Destillationsschritt. Die Abtrennung einwertiger Alkohole in Schritt ii) und die Abtrennung von 1,4-Butandiol in Schritt iii) können in einem Destillationsschritt oder in getrennten Destillationsschritten durchgeführt werden. Bevorzugt werden die Abtrennung einwertiger Alkohole in Schritt ii) und die Abtrennung von Butandiol in Schritt iii) in zwei getrennten Destillationsschritten durchgeführt.

Während der Umsetzung wird im Allgemeinen neben 1,4-Butandiol mindestens ein C1 bis C14 Alkohol, bevorzugt mindestens ein C1 bis C10 Alkohol, besonders bevorzugt mindestens ein C 1 bis C5 Alkohol, ganz besonders bevorzugt mindestens ein C1 bis C2 Alkohol und insbesondere bevorzugt Methanol abdestilliert.

Ein weiterer Gegenstand der vorliegenden Anmeldung ist ein Polyester, welcher durch das erfindungsgemäße Verfahren erhältlich ist.

Die Polyester, die durch das erfindungsgemäße Verfahren hergestellt werden bzw. die erfindungsgemäßen Polyester, haben im Allgemeinen eine lineare oder verzweigte Molekülstruktur.

Bevorzugt ist die Molekülstruktur leicht verzweigt. Linear bedeutet, dass die Polyester-Moleküle jeweils nur aus einer Polymerkette bestehen und keine Verzweigungen besitzen. Ein verzweigter Polyester ist dadurch kennzeichnet, dass an die Haupt-Polymerkette Verzweigungen mit Seitenketten angebunden sind. Verzweigte Polyester unterscheiden sich in ihrem Verzweigungsgrad. Dieser wird in dem erfindungsgemäß erhaltenen Polyester bzw. dem erfindungsgemäßen Polyester im Allgemeinen durch den Anteil an Glycerin bestimmt, der bevorzugt 0,05 bis 0,15 Gewichtsteile bezogen auf das 100 Gewichteile des fertigen Polymers beträgt.

Geeignete Molekulargewichtsbereiche der erfindungsgemäß erhaltenen Polyester bzw. der erfindungsgemäßen Polyester sind dem Fachmann allgemein bekannt. In der erfindungsgemäßen Ausführungsform liegt das zahlenmittlere Molekulargewicht der Polyester im Allgemeinen im Bereich von 5 000 bis 150 000 g/mol, bevorzugt im Bereich von 10 000 bis 100 000 g/mol, bevorzugt im Bereich von 15 000 bis 50 000 g/mol und besonders bevorzugt im Bereich von 20 000 bis 30 000 g/mol. Die Bestimmung des zahlenmittleren Molekulargewichts erfolgt im Allgemeinen mittels Gelpermeationschromatographie (GPC).

Im Allgemeinen ist die Hydroxylzahl der aus dem erfindungsgemäßen Verfahren erhaltenen Polyester bzw. der erfindungsgemäßen Polyester möglichst klein.

Die aus dem erfindungsgemäßen Verfahren erhaltenen Polyester bzw. die erfindungsgemäßen Polyester weisen im Allgemeinen eine Hydroxylzahl im Bereich von >0 bis 50 mg KOH/g, bevorzugt 0,5 bis 30 mg KOH/g, besonders bevorzugt im Bereich von 1 bis 15 mg KOH/g, ganz besonders bevorzugt im Bereich von 1,5 bis 10 mg KOH/g und insbesondere bevorzugt im Bereich von 1,5 bis 6 mg KOH/g auf.

In einer weiteren Ausführungsform weisen die aus dem erfindungsgemäßen Verfahren erhaltenen Polyester bzw. die erfindungsgemäßen Polyester, deren Dicarbonsäure-Komponente (B) mindestens einen Dialkylester umfasst, im Allgemeinen eine Hydroxylzahl im Bereich von >0 bis 50 mg KOH/g, bevorzugt 1 bis 30 mg KOH/g, besonders bevorzugt im Bereich von 1,5 bis 15 mg KOH/g, ganz besonders bevorzugt im Bereich von 2 bis 10 mg KOH/g und insbesondere bevorzugt im Bereich von 3 bis 6 mg KOH/g auf.

Im Allgemeinen ist die Säurezahl der aus dem erfindungsgemäßen Verfahren erhaltenen Polyester bzw. der erfindungsgemäßen Polyester ebenfalls möglichst klein.

Die Polyester, die durch das erfindungsgemäße Verfahren erhältlich sind bzw. die erfindungsgemäßen Polyester, haben im Allgemeinen eine Säurezahl von 0 bis 2,5 mg KOH/g, bevorzugt von 0,01 bis 2,4 mg KOH/g, besonders bevorzugt von 0,1 bis 2,3 mg KOH/g, ganz besonders bevorzugt von 0,3 bis 2,2 mg KOH/g und insbesondere bevorzugt von 0,6 bis 2 mg KOH/g.

In einer weiteren Ausführungsform haben die Polyester, die durch das erfindungsgemäße Verfahren erhältlich sind bzw. die erfindungsgemäßen Polyester, deren Dicarbonsäure-Komponente (B) auf mindestens einem Dialkylester basiert, im Allgemeinen eine Säurezahl von 0 bis 1,5 mg KOH/g, bevorzugt von 0,01 bis 1,5 mg KOH/g, besonders bevorzugt von 0,1 bis 1,4 mg KOH/g, ganz besonders bevorzugt von 0,3 bis 1,3 mg KOH/g und insbesondere bevorzugt von 0,6 bis 1,2 mg KOH/g.

Im Allgemeinen ist bei dem aus dem erfindungsgemäßen Verfahren erhaltenen Polyester bzw. dem erfindungsgemäßen Polyester das Verhältnis Hydroxylzahl : Säurezahl >1.
Im Allgemeinen ist bei dem aus dem erfindungsgemäßen Verfahren erhaltenen Polyester bzw. dem erfindungsgemäßen Polyester, deren Dicarbonsäure-Komponente (B) auf mindestens einem Dialkylester basiert, das Verhältnis Hydroxylzahl : Säurezahl >3. Bevorzugt ist das Verhältnis Hydroxylzahl : Säurezahl >5.

Der aus dem erfindungsgemäßen Verfahren erhaltene Polyester bzw. der erfindungsgemäße Polyester weist in 0,05 g/ml Lösung in Phenol/Dichlorbenzol (1:1) gelöst bei einer Temperatur von 25 °C eine Viskosität von 40 bis 110 mL/g, bevorzugt 50 bis 100 mL/g und besonders bevorzugt 60 bis 90 mL/g auf.

Die Polyester, die durch das erfindungsgemäße Verfahren erhältlich sind bzw. die erfindungsgemäßen Polyester, haben im Allgemeinen einen Polydispersitätsindex von 1 bis 4. Bevorzugt haben Polyester, die durch das erfindungsgemäße Verfahren erhältlich sind, bzw. die erfindungsgemäßen Polyester, deren Dicarbonsäure-Komponente (B) auf mindestens einem Dialkylester basiert, einen Polydispersitätsindex von 1,5 bis 3,5, bevorzugt von 2 bis 3 und besonders bevorzugt von 2,5 bis 2,9.

Die Polyester, die durch das erfindungsgemäße Verfahren erhältlich sind bzw. die erfindungsgemäßen Polyester, sind im Allgemeinen biologisch abbaubar.

Ein weiterer Gegenstand der vorliegenden Anmeldung ist ein Polyester enthaltend
a) eine Furandicarbonsäure-Komponente (A), die mindestens eine Furandicarbonsäure umfasst,
b) eine Dicarbonsäure-Komponente (B), die mindestens eine Dicarbonsäure umfasst, sowie
c) eine Alkohol-Komponente (C), die mindestens 1,4-Butandiol umfasst,
wobei der Polyester eine Hydroxylzahl von >0 bis 50 mg KOH/g, bevorzugt 0,5 bis 30 mg KOH/g, besonders bevorzugt im Bereich von 1 bis 15 mg KOH/g, ganz besonders bevorzugt im Bereich von 1,5 bis 10 mg KOH/g und insbesondere bevorzugt im Bereich von 1,5 bis 6 mg KOH/g und eine Säurezahl von 0 bis 2,5 mg KOH/g, bevorzugt von 0,01 bis 2,4 mg KOH/g, besonders bevorzugt von 0,1 bis 2,3 mg KOH/g, ganz besonders bevorzugt von 0,3 bis 2,2 mg KOH/g und insbesondere bevorzugt von 0,6 bis 2 mg KOH/g aufweist.

Ein weiterer Gegenstand der vorliegenden Anmeldung ist ein Polyester enthaltend
a) eine Furandicarbonsäure-Komponente (A), die mindestens eine Furandicarbonsäure umfasst,
b) eine Dicarbonsäure-Komponente (B), die mindestens eine Dicarbonsäure umfasst, sowie
c) eine Alkohol-Komponente (C), die mindestens 1,4-Butandiol umfasst,
wobei der Polyester eine Hydroxylzahl von >0 bis 50 mg KOH/g, bevorzugt 1 bis 30 mg KOH/g, besonders bevorzugt im Bereich von 1,5 bis 15 mg KOH/g, ganz besonders bevorzugt im Bereich von 2 bis 10 mg KOH/g und insbesondere bevorzugt im Bereich von 3 bis 6 mg KOH/g und eine Säurezahl von 0 bis 1,5 mg KOH/g, bevorzugt von 0,01 bis 1,5 mg KOH/g, besonders bevorzugt von 0,1 bis 1,4 mg KOH/g, ganz besonders bevorzugt von 0,3 bis 1,3 mg KOH/g und insbesondere bevorzugt von 0,6 bis 1,2 mg KOH/g aufweist.

Ein weiterer Gegenstand der vorliegenden Anmeldung ist ein Polyester enthaltend
a) 25 bis 75 Gew.-%, bevorzugt 35 bis 60 Gew.-% und besonders bevorzugt 40 bis 50 Gew.-% einer Furandicarbonsäure-Komponente (A), basierend auf mindestens einem Dialkylester einer Furandicarbonsäure, welche vorzugsweise mindestens eine Dialkylester der 2,5-Furandicarbonsäure enthält, bevorzugt Dimethyl-2,5-furandicarbonsäure und/oder Diethyl-2,5-furandicarbonsäure enthält, besonders bevorzugt Dimethyl-2,5-furandicarbonsäure enthält, ganz besonders bevorzugt aus einem Dialkylester der 2,5-Furandicarbonsäure besteht und insbesondere bevorzugt aus Dimethyl-2,5-furandicarbonsäure besteht sowie vorzugsweise mit einwertigen Alkoholen basierend auf 1 bis 14 Kohlenstoffatomen, bevorzugt 1 bis 10 Kohlenstoffatomen, besonders bevorzugt 1 bis 8 Kohlenstoffatomen, ganz besonders bevorzugt 1 bis 5 Kohlenstoffatomen und insbesondere bevorzugt 1 bis 2 Kohlenstoffatomen verestert ist.
b) 5 bis 55 Gew.-%, 10 bis 35 Gew.-% und besonders bevorzugt 15 bis 25 Gew.-% einer Dicarbonsäure-Komponente (B), basierend auf mindestens einer Dicarbonsäure oder deren Dialkylester oder deren Anhydrid, welche vorzugsweise Bernsteinsäure, Adipinsäure, Sebacinsäure und/oder deren Dimethyl- und/oder Diethylester enthält, bevorzugt Bernsteinsäure, Adipinsäure, Sebacinsäure und/oder deren Dimethyester enthält, besonders bevorzugt aus Bernsteinsäure, Adipinsäure, Sebacinsäure und/oder deren Dimethyl- und/oder Diethylestern besteht sowie ganz besonders bevorzugt aus Bernsteinsäure, Adipinsäure, Sebacinsäure und/oder deren Dimethylester besteht, sowie
c) 20 bis 70 Gew.-%, 30 bis 55 Gew.-% und besonders bevorzugt 35 bis 45 Gew.-% einer Alkohol-Komponente (C), basierend auf mindestens 1,4-Butandiol, welche neben 1,4-Butandiol bevorzugt Glycerin enthält, sowie besonders bevorzugt aus 1,4-Butandiol und Glycerin besteht,
wobei die Hydroxylzahl von >0 bis 50 mg KOH/g, bevorzugt von 0,5 bis 30 mg KOH/g, besonders bevorzugt von 1 bis 15 mg KOH/g, ganz besonders bevorzugt von 1,5 bis 10 mg KOH/g und insbesondere bevorzugt von 1,5 bis 6 mg KOH/g und die Säurezahl 0 bis 2,5 mg KOH/g, bevorzugt von 0,01 bis 2,4 mg KOH/g, besonders bevorzugt von 0,1 bis 2,3 mg KOH/g, ganz besonders bevorzugt von 0,3 bis 2,2 mg KOH/g und insbesondere bevorzugt von 0,6 bis 2 mg KOH/g beträgt.

Ein weiterer Gegenstand der vorliegenden Anmeldung ist ein Polyester enthaltend
a) 25 bis 75 Gew.-%, bevorzugt 35 bis 60 Gew.-% und besonders bevorzugt 40 bis 50 Gew.-% einer Furandicarbonsäure-Komponente (A), basierend auf mindestens einem Dialkylester einer Furandicarbonsäure, welche vorzugsweise mindestens eine Dialkylester der 2,5-Furandicarbonsäure enthält, bevorzugt Dimethyl-2,5-furandicarbonsäure und/oder Diethyl-2,5-furandicarbonsäure enthält, besonders bevorzugt Dimethyl-2,5-furandicarbonsäure enthält, ganz besonders bevorzugt aus einem Dialkylester der 2,5-Furandicarbonsäure besteht und insbesondere bevorzugt aus Dimethyl-2,5-furandicarbonsäure besteht sowie vorzugsweise mit einwertigen Alkoholen basierend auf 1 bis 14 Kohlenstoffatomen, bevorzugt 1 bis 10 Kohlenstoffatomen, besonders bevorzugt 1 bis 8 Kohlenstoffatomen, ganz besonders bevorzugt 1 bis 5 Kohlenstoffatomen und insbesondere bevorzugt 1 bis 2 Kohlenstoffatomen verestert ist.
b) 5 bis 55 Gew.-%, 10 bis 35 Gew.-% und besonders bevorzugt 15 bis 25 Gew.-% einer Dicarbonsäure-Komponente (B), basierend auf mindestens einem Dialkylester, welche vorzugsweise Dimethyl- und/oder Diethylester der Bernsteinsäure, Adipinsäure und/oder Sebacinsäure enthält, bevorzugt Dimethyester der Bernsteinsäure, Adipinsäure und/oder Sebacinsäure enthält, besonders bevorzugt aus Dimethyl- und/oder Diethylestern der Bernsteinsäure, Adipinsäure und/oder Sebacinsäure besteht sowie ganz besonders bevorzugt aus Dimethylestern der Bernsteinsäure, Adipinsäure und/oder Sebacinsäure besteht, sowie
c) 20 bis 70 Gew.-%, 30 bis 55 Gew.-% und besonders bevorzugt 35 bis 45 Gew.-% einer Alkohol-Komponente (C), basierend auf mindestens 1,4-Butandiol, welche neben 1,4-Butandiol bevorzugt Glycerin enthält, sowie besonders bevorzugt aus 1,4-Butandiol und Glycerin besteht,
wobei die Hydroxylzahl von >0 bis 50 mg KOH/g, bevorzugt von 1 bis 30 mg KOH/g, besonders bevorzugt von 1,5 bis 15 mg KOH/g, ganz besonders bevorzugt von 2 bis 10 mg KOH/g und insbesondere bevorzugt von 3 bis 6 mg KOH/g und die Säurezahl 0 bis 1,5 mg KOH/g, bevorzugt von 0,01 bis 1,5 mg KOH/g, besonders bevorzugt von 0,1 bis 1,4 mg KOH/g, ganz besonders bevorzugt von 0,3 bis 1,3 mg KOH/g und insbesondere bevorzugt von 0,6 bis 1,2 mg KOH/g beträgt.

Ein weiterer Gegenstand der vorliegenden Anmeldung ist ein Polyester enthaltend
a) 25 bis 75 Gew.-%, bevorzugt 35 bis 60 Gew.-% und besonders bevorzugt 40 bis 50 Gew.-% einer Furandicarbonsäure-Komponente (A), basierend auf mindestens einem Dialkylester einer Furandicarbonsäure, welche vorzugsweise mindestens eine Dialkylester der 2,5-Furandicarbonsäure enthält, bevorzugt Dimethyl-2,5-furandicarbonsäure und/oder Diethyl-2,5-furandicarbonsäure enthält, besonders bevorzugt Dimethyl-2,5-furandicarbonsäure enthält, ganz besonders bevorzugt aus einem Dialkylester der 2,5-Furandicarbonsäure besteht und insbesondere bevorzugt aus Dimethyl-2,5-furandicarbonsäure besteht sowie vorzugsweise mit einwertigen Alkoholen basierend auf 1 bis 14 Kohlenstoffatomen, bevorzugt 1 bis 10 Kohlenstoffatomen, besonders bevorzugt 1 bis 8 Kohlenstoffatomen, ganz besonders bevorzugt 1 bis 5 Kohlenstoffatomen und insbesondere bevorzugt 1 bis 2 Kohlenstoffatomen verestert ist.
b) 5 bis 55 Gew.-%, 10 bis 35 Gew.-% und besonders bevorzugt 15 bis 25 Gew.-% einer Dicarbonsäure-Komponente (B), basierend auf mindestens einem Dialkylester, welcher vorzugsweise Dimethyl- und/oder Diethylester der Bernsteinsäure, Adipinsäure und/oder Sebacinsäure enthält, bevorzugt Dimethyester der Bernsteinsäure, Adipinsäure und/oder Sebacinsäure enthält, besonders bevorzugt aus Dimethyl- und/oder Diethylestern der Bernsteinsäure, Adipinsäure und/oder Sebacinsäure besteht sowie ganz besonders bevorzugt aus Dimethylestern der Bernsteinsäure, Adipinsäure und/oder Sebacinsäure besteht, sowie
c) 20 bis 70 Gew.-%, 30 bis 55 Gew.-% und besonders bevorzugt 35 bis 45 Gew.-% einer Alkohol-Komponente (C), basierend auf mindestens 1,4-Butandiol, welche neben 1,4-Butandiol bevorzugt Glycerin enthält, sowie besonders bevorzugt aus 1,4-Butandiol und Glycerin besteht,
wobei die Hydroxylzahl von 0 bis 10 mg KOH/g, bevorzugt von 1 bis 10 mg KOH/g, besonders bevorzugt von 1,5 bis 8 mg KOH/g, ganz besonders bevorzugt von 2 bis 7 mg KOH/g und insbesondere bevorzugt von 3 bis 6 mg KOH/g und die Säurezahl 0 bis 1,5 mg KOH/g, bevorzugt von 0,01 bis 1,5 mg KOH/g, besonders bevorzugt von 0,1 bis 1,4 mg KOH/g, ganz besonders bevorzugt von 0,3 bis 1,3 mg KOH/g und insbesondere bevorzugt von 0,6 bis 1,2 mg KOH/g beträgt.

Im Allgemeinen sind in dem Polyesterpolyol >0 bis 1 Gew.-%, bevorzugt 0,01 bis 0,5 Gew.-% und besonders bevorzugt 0,05 bis 0,15 Gew.-% Glycerin bezogen auf das Gesamtgewicht des Polyesterpolyols enthalten.

### Weitere optionale Komponenten

Die Polyester erhältlich aus dem erfindungsgemäßen Verfahren können im Allgemeinen Kettenverlängerer enthalten. Diese sind dem Fachmann allgemein bekannt oder in der WO 2009/135921 A1 beschrieben, wie Isocyanate, Isocyanide, Epoxide, Polyepoxide, Oxazoline oder Carbodiimide, bevorzugt Polyepoxide, Oxazoline oder Carbodiimide.

Im Allgemeinen sind diese Kettenverlängerer zu 0,01 bis 2 Gewichtsteilen, bevorzugt 0,05 bis 1,5 Gewichtsteilen, besonders bevorzugt 0,06 bis 0,8 Gewichtsteilen, ganz besonders bevorzugt 0,1 bis 0,5 Gewichtsteilen bezogen auf 100 Gewichtsteile des Polyesters in dem Polyester enthalten.

Geeignete Epoxide oder Polyepoxide sind dem Fachmann allgemein bekannt oder ebenfalls in der WO 2009/135921 A1 beschrieben. Diese stammen im Allgemeinen aus epoxidierten Ölen und/oder aus Styrol-Glycidyl-Methylmetacrylat oder Glycidyl-Methylmetacrylat und haben im Allgemeinen ein zahlenmittleres Molekulargewicht von 1 000 bis 10 000 g/mol. Im Allgemeinen ist die Zahl der Epoxidgruppen pro Molekül von 1 bis 30, bevorzugt von 5 bis 25.

Geeignete Epoxide oder Polyepoxide sind dem Fachmann allgemein bekannt oder z.B. in WO 2009/135921 A1 beschrieben. Geeignete Epoxide oder Polyepoxide sind beispielsweise Diethylenglykol-diglycidether, Polyethylenglykol-diglycidether, Glycerin-polyglycidether, Diglycerinpolyglycidether, 1,2-Epoxybutan, Polyglycerin-polyglycidether, Isoprendiepoxid, Cycloaliphatische Diepoxide, 1,4-Cyclohexandimethanol-diglycidether, Glycidyl-2-methylphenylether, Glycerin-propoxylat-triglycidether, 1,4-Butandiol-diglycidether, Sorbitol-polyglycidether, Glycerindiglycidether, Tetraglycidether von meta-Xyloldiamin, Diglycidether von Bisphenol A oder Diglycidether von Bisphenol F.

Epoxide oder Polyepoxide werden im Allgemeinen in Mengen von 0,1 bis 1,5 Gewichtsteilen, bevorzugt 0,2 bis 0,8 Gewichtsteilen bezogen auf 100 Gewichtsteile des Polyesters hinzugefügt.

Geeignete Carbodiimide sind dem Fachmann allgemein bekannt oder z.B in WO 2009/135921 A1 beschrieben. Geeignete Carbodiimide sind beispielsweise Poly(cycloocten carbodiimid), Poly(1,4-dimethylen phenylen carbodiimid), Poly(cyclohexen carbodiimid), Polyethylen carbodiimid), Poly(butylen carbodiimid), Poly(isobutylen carbodiimid), Poly(nonylen carbodiimid), Poly(dodecylen carbodiimid), Poly(neopentylen carbodiimid), Poly(1,4-dimethylen cyclohexen carbodiimid), Poly(2,2',6,6-tetra-isopropyl-diphenylen carbodiimid), poly(2,4,6-triisopropyl-1,3-phenylen carbodiimid), Poly(1,3,5-triisopropyl-phenylen-2,4-carbodiimid), Poly(2,6-diisopropyl-1,3-phenylene carbodiimid), Poly(tolyl carbodiimid), Poly(4,4'-diphenylmethan carbodiimid), Poly(3,3'-dimethyl-4,4'-biphenylen carbodiimid), Poly(p-phenyl carbodiimid), Poly(m-phenylen carbodiimid), Poly(3,3'-dimethyl-4,4'-diphenylmethan carbodiimid), Poly(naphthylen carbodiimid), Poly(isophoron carbodiimid), Poly(cumol carbodiimid), p-Phenylen bis(ethylcarbodiimid), 1,6-Hexamethylen bis(ethylcarbodiimid), 1,8-Octamethylen bis(ethylcarbodiimid), 1,10-Decamethylen bis(ethylcarbodiimid), 1,12-Dodecamethylen bis(ethylcarbodiimid).

Die genannten Kettenverlängerer können erfindungsgemäß einzeln oder in einer Mischung aus mehreren Kettenverlängerern verwendet werden. Bevorzugt werden die genannten Kettenverlängerer einzeln verwendet.

Weiterhin können den Polyestern Hydroxycarbonsäuren zugesetzt werden. Diese sind dem Fachmann allgemein bekannt oder beispielsweise in WO 2009/135921 A1 beschrieben. Geeignete Hydroxycarbonsäuren sind beispielsweise Glycolsäure, Hydroxybutansäure, Hydroxycapronsäure, Hydroxypentansäure, 7-Hydroxyheptansäure, 8-Hydroxycapronsäure, 9-Hydroxynonansäure, Milchsäure oder Lactide. Geeignet sind zudem Gemische dieser Hydroxycarbonsäuren. Im Allgemeinen können die genannten Hydroxycarbonsäuren oder nach einer vorherigen Reaktion mit Dicarbonsäuren oder Diolen verwendet werden. Weiterhin können die genannten Hydroxycarbonsäuren an zufälligen Positionen oder als Bestandteil bestimmter Polymerkettenabschnitte in die Polyester eingebaut werden.

Im Allgemeinen sind diese Hydroxycarbonsäuren zu 0 bis 49 Mol-%, bevorzugt von 0 bis 30 Mol-% bezogen auf die gesamte molare Masse der Dicarbonsäure-Komponente (B) in dem Polyester enthalten.

Des Weiteren können dem Polyester Tri- oder Polycarbonsäuren zur Verzweigung von Polyesterpolymeren zugesetzt werden. Diese sind dem Fachmann allgemein bekannt.

Geeignete Tricarbonsäuren sind beispielsweise lineare oder verzweigte aliphatische, cycloaliphatische, aromatische, heteroaromatische oder heterocyclische Tricarbonsäuren oder deren Alkylester oder Halogenide. Im Allgemeinen weisen die Tricarbonsäuren 4 bis 20 Kohlenstoffatome auf.

Bevorzugt werden Benzoltricarbonsäuren verwendet.

Beispielsweise kann Trimellitsäure verwendet werden. Bevorzugt werden Trimellitsäure oder deren Alkylester, wie z.B. Methyl- oder Ethylester, oder Halogenide, wie z.B. Chloride, Bromide und/oder lodide verwendet. Besonders bevorzugt ist die Verwendung von Trimellitsäure.

Die genannten Tricarbonsäuren können erfindungsgemäß einzeln oder in einer Mischung aus mehreren Tricarbonsäuren verwendet werden.

Bei Polycarbonsäuren im Sinne der Erfindung handelt es sich um organische Verbindungen mit mindestens vier Caboxylgruppen. Geeignete Polycarbonsäuren sind beispielsweise lineare oder verzweigte aliphatische, cycloaliphatische, aromatische, heteroaromatische oder heterocyclisehe Polycarbonsäuren oder deren Alkylester oder Halogenide. Im Allgemeinen weisen die Polycarbonsäuren 5 bis 20 Kohlenstoffatome auf.

Bevorzugt werden Benzolpolycarbonsäuren verwendet.

Bevorzugt werden Pyromellitsäure oder deren Alkylester, wie z.B. Methyl- oder Ethylester, oder Halogenide, wie z.B. Chloride, Bromide und/oder lodide verwendet. Besonders bevorzugt ist die Verwendung von Pyromellitsäure.

Die genannten Polycarbonsäuren können erfindungsgemäß einzeln oder in einer Mischung aus mehreren Polycarbonsäuren verwendet werden.

Auch Mischungen der genannten Di-, Tri- oder Polycarbonsäuren sind erfindungsgemäß geeignet.

Die genannten Tri- und Polycarbonsäuren sind kommerziell erhältlich. Sie können zudem aus natürlichen Rohstoffen gewonnen werden. Als natürliche Rohstoffe werden insbesondere Substanzen bezeichnet, die durch Verarbeitung aus Pflanzen, beziehungsweise Teilen von Pflanzen (oder auch Tieren), gewonnen werden. Darüber hinaus können die genannten Tri- und Polycarbonsäuren durch mikrobiologische Verfahren produziert werden. Diese sind dem Fachmann allgemein bekannt oder analog zu F. Koopman, N. Wierckx, J.H. de Winde und H.J. Ruijssenaars. Bioresource Technology 2010, Band 101, Nr. 16, Seiten 6291 bis 6296.

Im Allgemeinen sind die Tri- und Polycarbonsäuren zu 0 bis 0,5 Mol-%, bevorzugt von 0 bis 0,2 Mol-%, besonders bevorzugt 0 bis 0,1 Mol-% bezogen auf die gesamte Stoffmenge der Dicarbonsäure-Komponente (B) in dem Polyester enthalten.

Weiterhin können die Polyester, beispielsweise zur Erhöhung des Molekulargewichts, Peroxide enthalten, welche z.B. während des Extrudierens hinzugefügt werden können. Geeignete Peroxide sind dem Fachmann allgemein bekannt oder beispielsweise in WO 2009/135921 A1 beschrieben. Geeignete Peroxide sind beispielsweise Dialkylperoxide, wie Dibenzoylperoxid, Dilaurylperoxid, Isononylperoxid, Di-(t-butylperoxyisopropyl)benzol, t-Butylperoxid, Dicumolperoxid, alpha,alpha'-Di-(t-butylperoxy)diisopropylbenzol, 2,5-Dimethyl-2,5-di-(t-butylperoxy)hexan, t-Butylcumolperoxid, Di-t-butylperoxid, 2,5-Dimethyl-2,5-di-(t-butylperoxy)hex-3-in, Di-(4-t-butylcyclohexyl)peroxydicarbonat, Dicetylperoxydicarbonat, Dimyristylperoxydicarbonat, 3,6,9-Triethyl-3,6,9-trimethyl-1,4,7-triperoxonan oder Di-(2-ethylhexyl)peroxydicarbonat.

Auch Mischungen der Peroxide sind erfindungsgemäß geeignet.

Im Allgemeinen sind die Peroxide bis zu 0,5 Gew.-%, bevorzugt von 0,01 bis 0,2 Gew.-% und besonders bevorzugt 0,01 bis 0,1 Gew.-% bezogen auf das Gesamtgewicht des Polyesters in dem Polyester enthalten.

Weitere Additive, die den Polyestern zugesetzt werden können, sind dem Fachmann allgemein bekannt, wie beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner. Beispiele sind dem Fachmann allgemein bekannt oder können WO 2011/101301 A1 entnommen werden.

Im Allgemeinen sind diese Additive zu 0,01 bis 2 Gew.-%, bevorzugt 0,05 bis 1,5 Gew.-% bezogen auf das Gesamtgewicht des Polyesters in dem Polyester enthalten.

### Verwendung

Die Verwendungsmöglichkeiten der Polyester, die durch das erfindungsgemäße Verfahren erhalten werden können oder der erfindungsgemäßen Polyester, sind dem Fachmann allgemein bekannt oder beispielsweise in WO 2009/135921 A1 beschrieben.

Beispielsweise ist der durch das erfindungsgemäße Verfahren hergestellte Polyester bzw. der erfindungsgemäße Polyester durch sein hohes Molekulargewicht, seinen verhältnismäßig hohen Anteil an Hydroxygruppen und seine niedrige Säurezahl zur Synthese von Polyurethan mit einem hohen Molekulargewicht geeignet.

Im Allgemeinen wird der durch das erfindungsgemäße Verfahren hergestellte Polyester bzw. der erfindungsgemäße Polyester zur Herstellung von Polyurethan (PU) verwendet. Verfahren zur Herstellung von PU sind dem Fachmann allgemein bekannt oder beispielsweise in WO 2014/191503 A9 oder WO 1999/015573 A1 beschrieben.

Zur Herstellung von Polyurethan werden der durch das erfindungsgemäße Verfahren hergestellte Polyester bzw. der erfindungsgemäße Polyester sowie die weiteren Komponenten im Allgemeinen ohne organisches Lösungsmittel bei einem Wassergehalt von weniger als 0,5 Gew.-%, bezogen auf das Gesamtgewicht aus dem Polyester und den weiteren Komponenten, gemischt. Im Allgemeinen wird dazu eine Schmelze aus dem durch das erfindungsgemäße Verfahren hergestellten Polyester oder dem erfindungsgemäßen Polyester hergestellt.

Als Isocyanat-Komponente des Polyurethans wird im Allgemeinen mindestens ein Isocyanat mit mindestens einer Isocyanatgruppe verwendet. Geeignet sind beispielsweise Monoisocyanate oder Polyisocanate, oder Isocyanurat-, Biuret- oder Allophanat-Verbindungen. Bei Polyisocyanaten im Sinne der Erfindung handelt es sich um organische Verbindungen mit mindestens zwei Isocyanatgruppen.

Bevorzugt werden Polyisocyanate verwendet. Besonders bevorzugt werden Diisocyanate verwendet.

Geeignete Diisocyanate sind im Allgemeinen lineare oder verzweigte aliphatische, araliphatische, cycloaliphatische und/oder aromatische Diisocyanate, beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophorondiisocyanat, IPDI), 1-Isocyanato-4-[(4-isocyanatocyclohexyl)methyl]cyclohexan (H12MDI), 1-Methyl-2,4- und/oder - 2,6-cyclohexan-diisocyanat und/oder, 4,4'-, 2,4'- und 2,2'-Dicyclohexylmethan-diisocyanat (H12MDI), 2,6-Diisocyanatohexancarbonsäureester, 1,4- und/oder 1,3-Bis(iso-cyanatomethyl)cyclohexan (HXDI), 1,4-Cyclohexan-diisocyanat, 1-Methyl-2,4-und/oder -2,6-cyclohexan-diisocyanat und/oder 4,4'-,2,4'- und 2,2'-Dicyclohexyl-methan-diisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat (HDI), 4,4'-, 2,4'- und/oder 2,2'-Dicyclohexylmethan-diisocyanat (H12MDI), und/oder IPDI, besonders bevorzugt 4,4'- Diphenylmethandiisocyanat (MDI) und/oder Hexamethylendiisocyanat (HDI) und/oder H12MDI. Ganz besonders bevorzugt wird Hexamethylendiisocyanat (HDI) verwendet.

Auch Mischungen der genannten Diisocyanate sind geeignet.

In einer bevorzugten Ausführungsform enthält die Isocyanat-Komponente mindestens Hexamethylendiisocyanat (HDI). Besonders bevorzugt besteht die Isocyanat-Komponente aus Hexamethylendiisocyanat (HDI).

Weitere verwendbare Mono- und Polyisocyanate sind dem Fachmann allgemein bekannt.

Auch Mischungen der genannten Isocyanate und/oder Polyisocyanate sind geeignet.

Die genannten Isocyanate und Polyisocyanate sind kommerziell erhältlich oder können aus natürlichen Rohstoffen gewonnen werden. Als natürliche Rohstoffe werden insbesondere Substanzen bezeichnet, die durch Verarbeitung aus Pflanzen, beziehungsweise Teilen von Pflanzen (oder auch Tieren) gewonnen werden.

Im Allgemeinen werden dem durch das erfindungsgemäße Verfahren hergestellten Polyester bzw. dem erfindungsgemäße Polyester 0,1 bis 2,0 Gewichtsteile, bevorzugt 0,2 bis 1,0 Gewichtsteile Hexamethylendiisocyanat (HDI) bezogen auf das Gesamtgewicht des Polyurethans hinzugefügt.

Geeignete Katalysatoren sind die dem Fachmann allgemein bekannten Katalysatoren für die Synthese von Polyurethanen und z.B. in WO 2014/191053 A9 oder WO 2011/083000 A1 beschrieben, wie beispielsweise tertiäre Amine oder organische Metallverbindungen.

Geeignete tertiäre Amine sind beispielsweise Triethylamin, Dimethylcyclohexylamin, N-Methylmorpholin, N, N'- Dimethylpiperazin, 2-(Dimethylaminoethoxy)-ethanol, Diazabicyclo-(2,2,2)-octan.

Geeignete organische Metallverbindungen sind beispielsweise Lewis-saure organische Metallverbindungen. Unter Lewis-Säuren werden Stoffe verstanden, die unter Bildung einer kovalenten Bindung ein Elektronenpaar aufnehmen können (Elektronenpaar-Akzeptoren). Geeignete Lewis-saure organische Metallverbindungen sind beispielsweise Zinnverbindungen oder Zinksalze, oder Zinn- und Zink-freie Katalysatoren, wie beispielsweise Titansäureester oder Eisenverbindungen.

Als Zinn- und Zink-freie Katalysatoren sind u.a. organische Metallsalze des Wismuts, Zirkons, Titans, Aluminiums, Eisens, Mangans, Nickels und Cobalts geeignet sowie Cer- und Cäsiumsalze. Geeignete Eisenverbindungen sind z. B. Eisen- (VI)-acetylacetonat oder ähnliche. Geeignete Titansäureester sind z.B. Titantetrabutanolat oder Titantetraisopropoxid. Geeignete Zirkonverbindungen sind beispielsweise Zirkon-Acetylacetonat und Zirkon-2,2,6,6-tetramethyl-3,5-heptan-dionat.

Geeignete Lewis-saure organische Metallverbindungen sind auch Zinnverbindungen, wie z.B. Zinn-dialkylsalze aliphatischer Carbonsäuren, oder Zinksalze, wie beispielsweise Zinndiacetat, Zinndioctoat, Zinndilaurat, Dimethylzinndiacetat, Dibutylzinndibutyrat, Dibutylzinn-bis(2-ethylhexanoat), Dibutylzinndiacetat, Dibutylzinndilaurat, Dioctylzinndilaurat, Zink-(II)-diacetat oder Zink-(II)-dioctoat.

Bevorzugte Lewis-saure organische Metallverbindungen sind Zinnverbindungen oder die Zinn-dialkylsalze aliphatischer Carbonsäuren, wie beispielsweise Zinndiacetat, Zinndioctoat, Zinndilaurat, Dimethylzinndiacetat, Dibutylzinndibutyrat, Dibutylzinn-bis(2-ethylhexanoat), Dibutylzinndiacetat, Dibutylzinndilaurat, Dioctylzinndilaurat, oder Zinksalze, wie z.B. Zink-(II)-diacetat, Zink-(II)-dioctoat, oder Zirkonverbindungen, wie beispielsweise, Zirkon-Acetylacetonat oder Zirkon-2,2,6,6-tetramethyl-3,5-heptan-dionat, oder Wismut-Verbindungen oder Titansäurester.

Eine besonders bevorzugte Ausführungsform ist die Verwendung von Dibutylzinndilaurat als Katalysator.

Auch Mischungen der genannten Katalysatoren sind geeignet.

Geeignete Katalysatormengen sind beispielsweise von 0,00001 bis 0,1 Gew.-Teilen pro 100 Gew.-Teile Polyhydroxylverbindung.

Des Weiteren können dem Polyurethan beispielsweise Additive und/oder lacktypische Komponenten zugesetzt werden. Diese sind dem Fachmann allgemein bekannt. Geeignet sind beispielsweise Antioxidantien, UV-Stabilisatoren wie UV-Absorber und geeignete Radikalfänger (insbesondere HALS-Verbindungen, Hindered Amin Light Stabilizer), Aktivatoren (Beschleuniger), Trockenmittel, Füllstoffe, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Auch Mischungen der genannten Additive und/oder lacktypischen Komponenten sind geeignet. Weitere Details zu geeigneten Additiven und/oder lacktypischen Komponenten sowie den eingesetzten Mengen sind dem Fachmann allgemein bekannt oder beispielsweise in WO 2014/191503 A9 beschrieben.

Zudem können dem Polyurethangemisch auch Kettenverlängerungsmittel hinzugefügt werden. Diese sind dem Fachmann allgemein bekannt oder beispielsweise in WO 2013/135680 A1 beschrieben. Als Kettenverlängerungsmittel können beispielsweise aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1 ,2-Ethylenglykol, 1 ,3-Propandiol, 1 ,4-Butandiol, 1 ,6-Hexandiol, bevorzugt entsprechende Oligo- und/oder Polypropylenglykole. Auch Mischungen der genannten Kettenverlängerer sind erfindungsgemäß geeignet. Bevorzugt haben die Kettenverlängerungsmittel nur primäre Hydroxylgruppen, ganz besonders bevorzugt wird 1,4-Butandiol verwendet.

Die Verwendung von Polyurethanen enthaltend Polyester erhältlich aus dem erfindungsgemäßen Verfahren bzw. den erfindungsgemäßen Polyester ist dem Fachmann allgemein bekannt.

Im Allgemeinen können die durch das erfindungsgemäße Verfahren hergestellten Polyester bzw. die erfindungsgemäßen Polyester beispielsweise als Folien, Extrusionsbeschichtung, Fasern, Schäume oder gepresste Profile oder Blätter verwendet werden, oder z.B. durch Spritzgussverfahren, Thermoformen. Extrusionsblasformen, Spritzblasen, Rotationsformungsverfahren oder Streckblasformen oder ähnliche Methoden verarbeitet werden. Folien können beispielsweise durch Folienblasen, Foliengießen oder Koextrusion hergestellt werden.

Die durch das erfindungsgemäße Verfahren hergestellten Polyester bzw. die erfindungsgemäßen Polyester können beispielsweise verwendet werden zur Herstellung von
- Mono- und bi-axial orientierten Folien sowie mehrschichtigen Folien mit anderen Polymeren;
- Folien zur Nutzung im landwirtschaftlichen Bereich, wie beispielsweise Folien zur Verwendung beim Mulchen;
- Kunststofffolien oder Frischhaltefolien zur Verwendung mit Nahrungsmitteln, Ballen in der Landwirtschaft oder zum Verpacken von Abfällen;
- Schrumpffolie, beispielsweise für Paletten, Mineralwasser, Sechserträgern oder ähnliche Anwendungen;
- Taschen und Müllbeutel zum Sammeln von Bio-Abfall, z.B. zum Sammeln von Lebensmittelabfällen oder Gartenabfällen;
- durch Thermoformen hergestellte ein- und mehrschichtige Verpackungen von Lebensmitteln, wie beispielsweise Behälter für Milch, Joghurt, Fleisch, Getränke, u.a.;
- Behältern erhältlich durch Methoden der Extrusionsbeschichtung;
- Mehrschichtigen Schichtstoffen mit starren oder flexiblen Zusätzen wie beispielsweise Papier-, Kunststoff-, Aluminium- oder Metallfolien;
- Geschäumten oder aufschäumbaren Körnern zur Herstellung von Gegenständen mittels Sintern;
- Geschäumten oder teilweise geschäumten Produkten, enthaltend geschäumte Blöcke, die durch die Verwendung von vorgeschäumten Komponenten geformt wurden;
- Geschäumten Platten oder durch Thermoformen hergestellten Schaumplatten sowie Behälter, die aus diesen erhalten werden können, für das Verpacken von Lebensmitteln;
- Behältern für Früchte oder Pflanzen im Allgemeinen;
- Gemischen mit gelierter, destrukturierter und/oder komplexierter Stärke, natürlicher Stärke, Mehlen oder anderen Füllstoffen natürlicher, pflanzlicher oder anorganischer Herkunft;
- Fasern, Mikrofasern, Verbundfasern mit einem Kern bestehend aus starren Polymeren, wie beispielsweise Polylactide (PLA), Polyethylenterephthalate (PET), Polytrimethylenterephthalate (PTT), etc., sowie einer äußeren Hülle aus den Polyestern erhältlich durch das erfindungsgemäße Verfahren, Fasern mit unterschiedlichen Querschnitten, von rund bis mehrlappig, Fasern in Flocken, gewebten Stoffen, Faserstoffen und Textilverbundstoffen, oder Spinnvlies oder durch Thermobondieren hergestellte Gewebe zur Verwendung in sanitären und hygienischen Produkten, und in landwirtschaftlichen sowie Bekleidungsbereichen;
- Beschichtungen erhalten aus Extrusionsbeschichtung oder Pulverbeschichtung von Substraten umfassend Edelstahl, kohlenstoffhaltiger Stahl oder Aluminium sowie optional enthaltend Bindemittel oder Agenzien zur Kontrolle der Fließeigenschaften wie beispielsweise Siliziumdioxid oder Tonerde.

Verfahren zur Herstellung der genannten Produkte enthaltend Polyester erhältlich aus dem erfindungsgemäßen Verfahren bzw. erfindungsgemäße Polyester sind dem Fachmann allgemein bekannt oder beispielsweise in WO 2009/135921 A1 beschrieben.

Der Polyester erhältlich aus dem erfindungsgemäßen Verfahren bzw. der erfindungsgemäße Polyester kann zudem in Anwendungen anstelle von kunststoffbeschichtetem Polyvinylchlorid (PVC) verwendet werden.

Des Weiteren können Polyester erhältlich aus dem erfindungsgemäßen Verfahren bzw. erfindungsgemäße Polyester auch in Gemischen mit beispielsweise anderen Polyestern oder mit Polymeren natürlichen Ursprungs, wie beispielsweise Stärke, Cellulose, Gelatine, oder ähnliche, wie beispielsweise in WO 2009/135921 A1 genannt, verwendet werden. Diese Gemische können beispielsweise durch reaktive Extrusion hergestellt werden.

Die durch das erfindungsgemäße Verfahren hergestellten Polyester bzw. der erfindungsgemäße Polyester weisen im Allgemeinen eine niedrige Säurezahl auf und sind somit beispielsweise auch sehr gut zur Herstellung von Polyurethanen mit einem hohen Molekulargewicht geeignet. Diese können z.B. zur Herstellung von Beschichtungen oder Schaumstoffen verwendet werden.

Eine weitere Anwendungsmöglichkeit der durch das erfindungsgemäße Verfahren hergestellten Polyester bzw. der erfindungsgemäße Polyester ist deren Verwendung in Lacken, wie Polyurethan (PU) oder Hexamethoxymethylmelamin (HMMM) Lacken.

Eine bevorzugte Ausführungsform ist die Verwendung der durch das erfindungsgemäße Verfahren hergestellten Polyester bzw. der erfindungsgemäßen Polyester zur Herstellung von Folien, Verpackungen, Behältern, geschäumten Produkten, Fasern oder Verbundstoffen.

Eine weitere bevorzugte Ausführungsform ist die Verwendung der durch das erfindungsgemäße Verfahren hergestellten Polyester bzw. der erfindungsgemäßen Polyester zur Herstellung von Polyurethan.

Ein weiterer Gegenstand der vorliegenden Anmeldung ist ein Polyurethan basierend auf mindestens einem Polyester erhältlich nach dem erfindungsgemäßen Verfahren oder mindestens einem erfindungsgemäßen Polyester.

Die Erfindung wird durch die nachstehenden Beispiele näher erläutert.

### Beispiele

### Anwendungstechnische Messungen:

Die Viskositätszahl (VZ) wird gemäß ISO 1628-5 vom 01.03.1998 in 0,05 g/ml Lösung in Phenol/Dichlorbenzol (1:1) bestimmt.

Alle Molekulargewichte (Mn) werden mit Gelpermeationschromatographie (GPC) ermittelt. Die für GPC verwendeten Bedingungen sind wie folgt: die Trennung wird bei 40 °C mit einer Flussrate von 1 ml/min betrieben. Als Eluent wird Hexafluorisopropanol, das mit 0,05% Trifluoressigsäure-Kaliumsalz versetzt ist, eingesetzt. Die Kalibrierung erfolgt mit eng verteilten PMMA-Standards der Firma PSS mit Molekulargewichten von M = 800 bis M = 1.820.000. Die Werte außerhalb dieses Elutionsbereiches werden extrapoliert. Alle Proben werden in Hexafluorisopropanol, das mit 0,05% Trifluoressigsäure-Kaliumsalz versetzt ist, gelöst. Anschließend werden die Proben über Millipore Millex FG (0,2 µm) filtriert und 500 µL werden eingespritzt.

Der Polydispersitätsindex (PDI) der Polymere wird gemäß DIN 55672-1 (Version August 2007) bestimmt. Als Elutionsmittel wird Hexafluoroisopropanol (HFIP) mit 0,05 Gew.-% Trifluoroessigsäure-Kalium-Salz verwendet. Die Kalibrierung erfolgt mit eng verteilten Polymethylmethacrylat-Standards.

Zur Bestimmung der Säurezahl (S-Zahl) werden 1,0 g Probe eingewogen (m) und in 10 ml Toluol und 10 ml Pyridin gelöst. Nach Zugabe von 5 ml deionisiertem Wasser und 50 ml Tetrahydrofuran wird mit ethanolischer Kaliumhydroxid Maßlösung potentiographisch gegen den Wendepunkt titriert (V_{P}) [Potentiograph: ausgerüstet mit einem Dosimaten mit Wechselbürette (z.B. 10 ml) und einer kombinierten Glas-Ag/AgCI-Elektrode, z.B. Titroprozessor Typ 726 mit Dosimat 685 (Firma Metrohm)]. Unter den gleichen Bedingungen, nur ohne Prüfgegenstand, wird der Blindwert titriert (V_{B}).
Berechnung: Säurezahl in mg KOH/g = [(V_{P} - V_{B}) ∗ c_{KOH} ∗ t_{KOH} ∗ 56,10 g∗mol⁻¹] : m

Zur Bestimmung der Hydroxylzahl (OH-Zahl) werden 1,0 g Probe eingewogen (m) und in 10 ml Toluol gelöst. 9,8 ml Acetylierungsreagenz [Acetylierungsreagenz: 810 ml Pyridin + 100 ml Essigsäureanhydrid + 9 ml Essigsäure] werden zugegeben und die Mischung 1 h bei 95 °C gerührt. Nach Zugabe von 5 ml deionisiertem Wasser wird die Probe unter Rühren auf 23 °C abgekühlt, mit 50 ml Tetrahydrofuran versetzt und mit 0,5 molarer ethanolischer Kaliumhydroxid-Maßlösung potentiographisch gegen den Wendepunkt titriert (V_{P}) [Potentiograph: ausgerüstet mit einem Dosimaten mit Wechselbürette (z.B. 10 ml) und einer kombinierten Glas-Ag/AgCI-Elektrode, z.B. Titroprozessor Typ 726 mit Dosimat 685 (Firma Metrohm)]. Unter den gleichen Bedingungen, nur ohne Prüfgegenstand, wird der Wirkwert titriert (V_{W}).
Berechnung: Hydroxylzahl in mg KOH/g = [(V_{W} - V_{P}) ∗ c_{KOH} ∗ t_{KOH} ∗ 56,10 g∗mol⁻¹] : m

### Beispiel 1

Herstellung von Poly(butylensuccinat-co-furandicarboxylat) (PBSF) aus 1,4-Butandiol, 2,5-Dimethylfurandicarboxylat und Bernsteinsäuredimethylester
(Molverhältnis Furandicarbonsäure : Bernsteinsäure = 70 : 30): 108,14 g 1,4-Butandiol, 128,91 g 2,5-Dimethylfurandicarboxylat, 44,74 g Bernsteinsäuredimethylester, 0,20 g Glycerin und 0,21 g Tetrabutylorthotitanat (TBOT) werden in einem 500 mL-Vierhalskolben vorgelegt und die Apparatur wird mit Stickstoff gespült. Methanol wird bis zu einer Innentemperatur von 190 °C abdestilliert. Anschließend wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze wird auf 23 °C abgekühlt.
Mn = 24500 g/mol;
PDI = 2,8;
OH-Zahl: 6,0 mg KOH/g;
S-Zahl: 1,0 mg KOH/g;
VZ = 69,9 mL/g

### Beispiel 2

Herstellung von Poly(butylensebacat-co-furandicarboxylat) (PBSeF) aus 1,4-Butandiol, 2,5-Dimethylfurandicarboxylat und Sebacinsäuredimethylester
(Molverhältnis Furandicarbonsäure : Sebacinsäure = 70 : 30): 108,14 g 1,4-Butandiol, 128,91 g 2,5-Dimethylfurandicarboxylat, 69,79 g Sebacinsäuredimethylester, 0,22 g Glycerin und 0,24 g Tetrabutylorthotitanat (TBOT) werden in einem 500 mL-Vierhalskolben vorgelegt und die Apparatur wird mit Stickstoff gespült. Methanol wird bis zu einer Innentemperatur von 190 °C abdestilliert. Anschließend wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze wird auf 23 °C abgekühlt.
Mn = 26400 g/mol;
PDI = 2,9;
OH-Zahl: 4,0 mg KOH/g;
S-Zahl: 0,7 mg KOH/g

### Beispiel 3

Herstellung von Poly(butylenadipat-co-furandicarboxylat) (PBAF) aus 1,4-Butandiol, 2,5-Dimethylfurandicarboxylat und Adipinsäuredimethylester
(Molverhältnis Furandicarbonsäure : Adipinsäure = 70 : 30):
108,14 g 1,4-Butandiol, 128,91 g 2,5-Dimethylfurandicarboxylat, 52,78 g Adipinsäuredimethylester, 0,20 g Glycerin und 0,21 g Tetrabutylorthotitanat (TBOT) werden in einem 500 mL-Vierhalskolben vorgelegt und die Apparatur wird mit Stickstoff gespült. Methanol wird bis zu einer Innentemperatur von 190 °C abdestilliert. Anschließend wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze wird auf 23 °C abgekühlt.
Mn = 29700 g/mol;
PDI = 2,6;
OH-Zahl: 6,0 mg KOH/g;
S-Zahl: 1,1 mg KOH/g;
VZ = 87,6 mL/g

### Beispiel 4

Herstellung von Poly(butylenadipat-co-furandicarboxylat) (PBAF) aus 1,4-Butandiol, 2,5-Dimethylfurandicarboxylat und Adipinsäure
(Molverhältnis Furandicarbonsäure : Adipinsäure = 70:30):
54,07g 1,4-Butandiol, 64,45g Furandicarbonsäuredimethylester, 21,92g Adipinsäure, 0,11g Glycerin und 0,12g Tetrabutylorthotitanat (TBOT) werden in einem 250 mL Vierhalskolben vorgelegt und die Apparatur wird mit Stickstoff gespült. Methanol wird bis zu einer Innentemperatur von 192 °C abdestilliert. Anschließend wird der Druck auf ≤1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität (gemessen anhand des Drehmomentanstiegs des Rührers) der Polymerschmelze wird auf Raumtemperatur abgekühlt.
Mn = 24300 g/mol
PDI = 3,6
OH-Zahl: 2 mg KOH/g
S-Zahl: 1,7 mg KOH/g

### Beispiel 5

Herstellung von Poly(butylensebacat-co-furandicarboxylat) (PBSeF) aus 1,4-Butandiol, 2,5-Dimethylfurandicarboxylat und Sebacinsäure (Molverhältnis Furandicarbonsäure : Sebacinsäure = 70:30):
54,07g 1,4-Butandiol, 64,45g Furandicarbonsäuredimethylester, 30,34 g Sebacinsäure, 0,11g Glycerin und 0,12 g Tetrabutylorthotitanat (TBOT) werden in einem 250 mL Vierhalskolben vorgelegt und die Apparatur wird mit Stickstoff gespült. Methanol wird bis zu einer Innentemperatur von 193 °C abdestilliert. Anschließend wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze (gemessen anhand des Drehmomentanstiegs des Rührers) wird auf Raumtemperatur abgekühlt.
Mn = 25200 g/mol
PDI = 3,8
OH-Zahl: 2 mg KOH/g
S-Zahl: 1,8 mg KOH/g

### Vergleichsbeispiel 1

Herstellung von Poly(butylensuccinat-co-furandicarboxylat) (PBSF) aus 1,4-Butandiol und Bernsteinsäure und durch anschließende Zugabe von 2,5-Furandicarbonsäure (Molverhältnis Furandicarbonsäure : Bernsteinsäure = 70 : 30):
43,26 g 1,4-Butandiol, 14,17 g Bernsteinsäure und 0,09 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 43,71 g 2,5-Furandicarbonsäure und 0,08 g Glycerin zugesetzt und die Temperatur während einer weiteren Stunde bei 200 °C gehalten. Daraufhin wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Da jedoch auch nach fast 2 Stunden bei diesen Bedingungen die Viskosität der Polymerschmelze nicht ansteigt, wird der Versuch durch Abkühlen auf 23 °C abgebrochen.

### Vergleichsbeispiel 2

Herstellung von Poly(butylensebacat-co-furandicarboxylat) (PBSeF) aus 1,4-Butandiol und Sebacinsäure und durch anschließende Zugabe von 2,5-Furandicarbonsäure (Molverhältnis Furandicarbonsäure : Sebacinsäure = 70 : 30):
54,07 g 1,4-Butandiol, 30,34 g Sebacinsäure und 0,11 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 54,63 g 2,5-Furandicarbonsäure und 0,10 g Glycerin zugesetzt und die Temperatur während einer weiteren Stunde bei 200 °C gehalten. Daraufhin wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Da jedoch auch nach fast 2 Stunden bei diesen Bedingungen die Viskosität der Polymerschmelze nicht ansteigt, wird der Versuch durch Abkühlen auf 23 °C abgebrochen.

### Vergleichsbeispiel 3

Herstellung von Poly(butylenadipat-co-furandicarboxylat) (PBAF) aus 1,4-Butandiol und Adipinsäure und durch anschließende Zugabe von 2,5-Furandicarbonsäure
(Molverhältnis Furandicarbonsäure : Adipinsäure = 70 : 30):
43,26 g 1,4-Butandiol, 17,54 g Adipinsäure und 0,09 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 43,71 g 2,5-Furandicarbonsäure, 0,08 g Glycerin und 0,02 g Phosphorige Säure zugesetzt und die Temperatur während einer weiteren Stunde bei 200 °C gehalten. Daraufhin wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Da jedoch auch nach fast 2 Stunden bei diesen Bedingungen die Viskosität der Polymerschmelze nicht ansteigt, wird der Versuch durch Abkühlen auf 23 °C abgebrochen.

### Vergleichsbeispiel 4

Herstellung von Poly(butylensuccinat-co-furandicarboxylat) (PBSF) aus 1,4-Butandiol und Bernsteinsäure und durch anschließende Zugabe von 2,5-Dimethylfurandicarboxylat (Molverhältnis Furandicarbonsäure : Bernsteinsäure = 70 : 30):
54,07 g 1,4-Butandiol, 17,71 g Bernsteinsäure und 0,10 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 64,45 g 2,5-Dimethylfurandicarboxylat und 0,09 g Glycerin zugesetzt, wodurch die Temperatur leicht sinkt. Daraufhin wird während 50 min frei werdendes Methanol bei 180 °C abdestilliert. Schließlich wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze wird auf 23 °C abgekühlt.
Mn = 26500 g/mol;
PDI = 3,2;
OH-Zahl: <1,0 mg KOH/g;
S-Zahl: 0,6 mg KOH/g;
VZ = 97,3 mL/g

### Vergleichsbeispiel 5

Herstellung von Poly(butylensebacat-co-furandicarboxylat) (PBSeF) aus 1,4-Butandiol und Sebacinsäure und durch anschließende Zugabe von 2,5-Dimethylfurandicarboxylat (Molverhältnis Furandicarbonsäure : Sebacinsäure = 70 : 30):
54,07 g 1,4-Butandiol, 30,34 g Sebacinsäure und 0,10 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 64,45 g 2,5-Dimethylfurandicarboxylat und 0,09 g Glycerin zugesetzt, wodurch die Temperatur leicht sinkt. Daraufhin wird während einer Stunde frei werdendes Methanol bei 180 °C abdestilliert. Schließlich wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Nach Erreichen der gewünschten Viskosität der Polymerschmelze wird auf 23 °C abgekühlt.
Mn = 25700 g/mol;
PDI = 3,0;
OH-Zahl: 2,0 mg KOH/g;
S-Zahl: 0,2 mg KOH/g;
VZ = 96,6 mL/g

### Vergleichsbeispiel 6

Herstellung von Poly(butylenadipat-co-furandicarboxylat) (PBAF) aus 1,4-Butandiol und Adipinsäure und durch anschließende Zugabe von 2,5-Dimethylfurandicarboxylat (Molverhältnis Furandicarbonsäure : Adipinsäure = 70 : 30):
54,07 g 1,4-Butandiol, 21,92 g Adipinsäure und 0,10 g Tetrabutylorthotitanat (TBOT) werden in einem 250 mL-Vierhalskolben vorgelegt und die Apparatur wird mit Stickstoff gespült. Anschließend wird bis auf eine Innentemperatur von 200 °C erhitzt, um das bei der Reaktion frei werdende Wasser abzudestillieren. Nun werden 64,45 g 2,5-Dimethylfurandicarboxylat und 0,09 g Glycerin zugesetzt, wodurch die Temperatur leicht sinkt. Daraufhin wird während einer Stunde frei werdendes Methanol bei 190 °C abdestilliert. Schließlich wird der Druck auf ≤ 1 mbar (Messgrenze der Apparatur: 1 mbar) gesenkt und auf eine Innentemperatur von 210 °C erhitzt, um überschüssiges 1,4-Butandiol zu entfernen. Da jedoch auch nach fast 3 Stunden bei diesen Bedingungen die Viskosität der Polymerschmelze nicht ansteigt, wird der Versuch durch Abkühlen auf 23 °C abgebrochen.

### Vergleichsbeispiel 7

Herstellung von Poly(butylensuccinat-co-furandicarboxylat) (PBSF) aus 1,4-Butandiol und 2,5-Dimethylfurandicarboxylat und durch anschließende Zugabe von Bernsteinsäure (Molverhältnis Furandicarbonsäure : Bernsteinsäure = 70 : 30):
54,07 g 1,4-Butandiol, 64,97 g 2,5-Dimethylfurandicarboxylat und 0,11 g Tetrabutylorthotitanat (TBOT) werden in einem 250 mL-Vierhalskolben vorgelegt und die Apparatur wird mit Stickstoff gespült. Anschließend wird bis auf eine Innentemperatur von 190 °C erhitzt, um das bei der Reaktion frei werdende Methanol abzudestillieren. Nun werden 17,71 g Bernsteinsäure und 0,09 g Glycerin zugesetzt und die Temperatur während einer weiteren Stunde bei 200 °C gehalten, um das entstehende Wasser zu entfernen. Schließlich wird der Druck auf ≤ 1 mbar (Messgrenze der Apparatur: 1 mbar) gesenkt und auf eine Innentemperatur von 210 °C erhitzt, um überschüssiges 1,4-Butandiol abzudestillieren. Nach Erreichen der gewünschten Viskosität der Polymerschmelze wird auf 23 °C abgekühlt.
Mn = 21600 g/mol;
PDI = 3,4;
OH-Zahl: 3,0 mg KOH/g;
S-Zahl: 4,4 mg KOH/g

### Vergleichsbeispiel 8

Herstellung von Poly(butylensebacat-co-furandicarboxylat) (PBSeF) aus 1,4-Butandiol und 2,5-Dimethylfurandicarboxylat und durch anschließende Zugabe von Sebacinsäure (Molverhältnis Furandicarbonsäure : Sebacinsäure = 70 : 30):
54,07 g 1,4-Butandiol, 64,97 g 2,5-Dimethylfurandicarboxylat und 0,11 g Tetrabutylorthotitanat (TBOT) werden in einem 250 mL-Vierhalskolben vorgelegt und die Apparatur wird mit Stickstoff gespült. Anschließend wird bis auf eine Innentemperatur von 190 °C erhitzt, um das bei der Reaktion frei werdende Methanol abzudestillieren. Nun werden 30,34 g Sebacinsäure und 0,10 g Glycerin zugesetzt und die Temperatur während 50 min bei 200 °C gehalten, um das entstehende Wasser zu entfernen. Schließlich wird der Druck auf ≤ 1 mbar (Messgrenze der Apparatur: 1 mbar) gesenkt und auf eine Innentemperatur von 210 °C erhitzt, um überschüssiges 1,4-Butandiol abzudestillieren. Nach Erreichen der gewünschten Viskosität der Polymerschmelze wird auf 23 °C abgekühlt.
Mn = 23700 g/mol;
PDI = 3,3;
OH-Zahl: 3,0 mg KOH/g;
S-Zahl: 4,9 mg KOH/g;
VZ = 94,2 mL/g

### Vergleichsbeispiel 9

Herstellung von Poly(butylenadipat-co-furandicarboxylat) (PBAF) aus 1,4-Butandiol und 2,5-Dimethylfurandicarboxylat und durch anschließende Zugabe von Adipinsäure
(Molverhältnis Furandicarbonsäure : Adipinsäure = 70 : 30):
54,07 g 1,4-Butandiol, 64,97 g 2,5-Dimethylfurandicarboxylat und 0,11 g Tetrabutylorthotitanat (TBOT) werden in einem 250 mL-Vierhalskolben vorgelegt und die Apparatur wird mit Stickstoff gespült. Anschließend wird bis auf eine Innentemperatur von 190 °C erhitzt, um das bei der Reaktion frei werdende Methanol abzudestillieren. Nun werden 21,92 g Adipinsäure und 0,10 g Glycerin zugesetzt und die Temperatur während 50 min bei 200 °C gehalten, um das entstehende Wasser zu entfernen. Schließlich wird der Druck auf ≤ 1 mbar (Messgrenze der Apparatur: 1 mbar) gesenkt und auf eine Innentemperatur von 215 °C erhitzt, um überschüssiges 1,4-Butandiol abzudestillieren. Nach Erreichen der gewünschten Viskosität der Polymerschmelze wird auf 23 °C abgekühlt.
Mn = 18800 g/mol;
PDI = 2,9;
OH-Zahl: 5,0 mg KOH/g;
S-Zahl: 9,6 mg KOH/g;
VZ = 72,8 mL/g

### Vergleichsbeispiel 10

Herstellung von Poly(butylensebacat-co-furandicarboxylat) (PBSeF) aus 1,4-Butandiol, 2,5-Dimethylfurandicarboxylat und Sebacinsäure
(Molverhältnis Furandicarbonsäure : Sebacinsäure = 60:40):
5,88 g 1,4-Butandiol, 5,15 g Furandicarbonsäuredimethylester und 3,77 g Sebacinsäure werden in einem 25 mL Vierhalskolben vorgelegt und die Apparatur wird mit Stickstoff gespült. Bei einer Ölbadtemperatur von 200 °C (Innentemperatur 197 °C) wird Methanol und Wasser abdestilliert.

Nach 1 h werden 0,17 mL einer 1%igen TBOT Lösung in trockenem Toluol (entspricht 100ppm TBOT) zugegeben. Anschließend wird über einen Zeitraum von 3 h die Ölbadtemperatur schrittweise auf 235 °C erhöht. Nach Zugabe von weiteren 0,17 mL einer 10%igen TBOT Lösung in trockenem Toluol (entspricht 1000ppm TBOT) wird das Vakuum über einen Zeitraum von ungefähr 10 min auf < 1mbar abgesenkt (Messgrenze der Apparatur: 1 mbar). Die Ölbadtemperatur wird auf 240 °C eingestellt und die Reaktion noch weitere 2 h unter diesen Bedingungen gerührt. Am Ende der Reaktion hat sich die Schmelze deutlich braun verfärbt und es kommt zu keinerlei Anstieg des Rührerdrehmomentes, das heißt es hat sich kein hochmolekulares Polymer gebildet, was durch die analytischen Daten belegt wird.
Mn = 4170 g/mol
PDI = 2,4
OH-Zahl: < 1 mg KOH/g
S-Zahl: 13 mg KOH/g

### Vergleichsbeispiel 11

Herstellung von Poly(butylensebacat-co-furandicarboxylat) (PBSeF) aus 1,4-Butandiol, 2,5-Dimethylfurandicarboxylat und Sebacinsäure
(Molverhältnis Furandicarbonsäure : Sebacinsäure = 60:40):
58,80 g 1,4-Butandiol, 51,50 g Furandicarbonsäuredimethylester und 37,70 g Sebacinsäure werden in einem 250 mL Vierhalskolben vorgelegt und die Apparatur wird mit Stickstoff gespült. Bei einer Ölbadtemperatur von 197 °C (Innentemperatur 195 °C) wird Methanol und Wasser abdestilliert. 1 h nach Beginn der Destillation werden 0,17 mL einer 10%igen TBOT Lösung in trockenem Toluol (entspricht 100 ppm TBOT) zugegeben. Anschließend wird über einen Zeitraum von 3 h die Ölbadtemperatur schrittweise auf 235 °C erhöht. Nach Zugabe von weiteren 0,15 g TBOT (entspricht 1000 ppm) wird das Vakuum über einen Zeitraum von ungefähr 10 min auf < 1 mbar abgesenkt (Messgrenze der Apparatur: 1 mbar). Die Ölbadtemperatur wird auf 240 °C eingestellt und die Reaktion noch weitere 2 h unter diesen Bedingungen gerührt. Am Ende der Reaktion hat sich die Schmelze dunkelbraun verfärbt und es kommt zu keinem Zeitpunkt zu einem Anstieg des Rührerdrehmomentes, das heißt es hat sich kein hochmolekulares Polymer gebildet, was durch die analytischen Daten belegt wird.
Mn = 2950 g/mol
PDI = 2,1
OH-Zahl: < 2 mg KOH/g
S-Zahl: 16 mg KOH/g

### Vergleichsbeispiel 12

Herstellung von Poly(butylensebacat-co-furandicarboxylat) (PBSeF) aus 1,4-Butandiol, 2,5-Dimethylfurandicarboxylat und Sebacinsäure
(Molverhältnis Furandicarbonsäure : Sebacinsäure = 60:40):
58,80 g 1,4-Butandiol, 51,50 g Furandicarbonsäuredimethylester, 37,70 g Sebacinsäure werden in einem 250 mL Vierhalskolben vorgelegt und die Apparatur wird mit Stickstoff gespült. Bei einer Ölbadtemperatur von 190 °C (Innentemperatur 190 °C) wird Methanol und Wasser abdestilliert. 1 h nach Beginn der Destillation werden 0,17mL einer 10%igen TBOT Lösung in trockenem Toluol (entspricht 100 ppm TBOT) zugegeben. Anschließend wird über einen Zeitraum von 3 h die Ölbadtemperatur schrittweise auf 210 °C erhöht. Nach Zugabe von weiteren 0,15 g TBOT (entspricht 1000 ppm) wird das Vakuum über einen Zeitraum von ungefähr 10 min auf < 1mbar abgesenkt (Messgrenze der Apparatur: 1 mbar). Die Ölbadtemperatur wird auf 210 °C belassen und die Reaktion noch weitere 2 h unter diesen Bedingungen gerührt. Am Ende der Reaktion hat sich die Schmelze dunkelbraun verfärbt. Es kommt zu keinem Zeitpunkt zu einem Anstieg des Rührerdrehmomentes, das heißt es hatte sich kein hochmolekulares Polymer gebildet, was durch die analytischen Daten belegt wird.
Mn = 2580 g/mol
PDI = 2,0
OH-Zahl: < 1 mg KOH/g
S-Zahl: 12 mg KOH/g

### Vergleichsbeispiel 13

Herstellung von Poly(butylensebacat-co-furandicarboxylat) (PBSeF) aus 1,4-Butandiol, 2,5-Dimethylfurandicarboxylat und Sebacinsäure
(Molverhältnis Furandicarbonsäure : Sebacinsäure = 60:40):
58,80 g 1,4-Butandiol, 51,50 g Furandicarbonsäuredimethylester, 37,70 g Sebacinsäure und 0,11 g Glycerin werden in einem 250 mL Vierhalskolben vorgelegt und die Apparatur wird mit Stickstoff gespült. Bei einer Ölbadtemperatur von 190 °C (Innentemperatur 190 °C) wird Methanol und Wasser abdestilliert. 1 h nach Beginn der Destillation werden 0,17 mL einer 10%igen TBOT Lösung in trockenem Toluol (entspricht 100 ppm TBOT) zugegeben. Anschließend wird über einen Zeitraum von 3 h die Ölbadtemperatur schrittweise auf 235 °C erhöht. Nach Zugabe von weiteren 0,15 g TBOT (entspricht 1000 ppm) wird das Vakuum über einen Zeitraum von ungefähr 10 min auf < 1mbar abgesenkt (Messgrenze der Apparatur: 1 mbar). Die Ölbadtemperatur wird auf 240 °C erhöht und die Reaktion noch weitere 2 h unter diesen Bedingungen gerührt. Am Ende der Reaktion hat sich die dünnflüssige Schmelze dunkelbraun verfärbt. Es kommt zu keinem Zeitpunkt zu einem Anstieg des Rührerdrehmomentes, das heißt es hat sich kein hochmolekulares Polymer gebildet, was durch die analytischen Daten belegt wird.
Mn = 7150 g/mol
PDI = 3,0
OH-Zahl: nicht bestimmbar
S-Zahl: 10,5 mg KOH/g

### Vergleichsbeispiel 14

Herstellung von Poly(butylensebacat-co-furandicarboxylat) (PBSeF) aus 1,4-Butandiol, 2,5-Dimethylfurandicarboxylat und Sebacinsäure
(Molverhältnis Furandicarbonsäure : Sebacinsäure = 60:40):
58,80 g 1,4-Butandiol, 51,50 g Furandicarbonsäuredimethylester und 37,70 g Sebacinsäuredimethylester werden in einem 250 mL Vierhalskolben vorgelegt und die Apparatur wird mit Stickstoff gespült. Bei einer Ölbadtemperatur von 190 °C (Innentemperatur 190 °C) wird Methanol und Wasser abdestilliert. 1 h nach Beginn der Destillation werden 0,17 mL einer 10%igen TBOT Lösung in trockenem Toluol (entspricht 100 ppm TBOT) zugegeben. Anschließend wird über einen Zeitraum von 3 h die Ölbadtemperatur schrittweise auf 210 °C erhöht. Nach Zugabe von weiteren 0,15 g TBOT (entspricht 1000 ppm) wird das Vakuum über einen Zeitraum von ungefähr 10 min auf < 1mbar abgesenkt (Messgrenze der Apparatur: 1 mbar). Die Ölbadtemperatur wird auf 210 °C beibehalten und die Reaktion noch weitere 2 h unter diesen Bedingungen gerührt. Am Ende der Reaktion hat sich die dünnflüssige Schmelze dunkelbraun verfärbt. Es kommt zu keinem Zeitpunkt zu einem Anstieg des Rührerdrehmomentes, das heißt es hat sich kein hochmolekulares Polymer gebildet, was durch die analytischen Daten belegt wird.
Mn = 2310 g/mol
PDI = 2,0
OH-Zahl: < 1 mg KOH/g
S-Zahl: 6,9 mg KOH/g

**Tabelle 1: Übersicht über Polymere aus den erfindungsgemäßen Beispielen 1 bis 3 und den Vergleichsbeispielen 1 bis 9**

| Vorschrift | Poly-Butandiol-Succinylsäure-FDCA | Poly-Butandiol-Succinylsäure-FDCA | Poly-Butandiol-Adipinsäure-FDCA |
|---|---|---|---|
| | (PBSF) | (PBSeF) | (PBAF) |
| Komponenten gleichzeitig umgesetzt | **Beispiel 1** | **Beispiel 2** | **Beispiel 3** |
| BDO + aliphatische DMe | OH-Zahl: 6,0 mg KOH / g | OH-Zahl: 4,0 mg KOH / g | OH-Zahl: 6,0 mg KOH / g |
| | S-Zahl: 1,0 mg KOH / g | S-Zahl: 0,7 mg KOH / g | S-Zahl: 1,1 mg KOH / g |
| + DMe-FDCA | Mn: 24500 g/mol | Mn: 26400 g/mol | Mn: 29700 g/mol |
| | VZ: 69,9 mL/g | | VZ: 87,6 mL/g |

| Komponenten nacheinander umgesetzt | **Vergleichsbeispiel 1** | **Vergleichsbeispiel 2** | **Vergleichsbeispiel 3** |
|---|---|---|---|
| 1) BDO + aliphatische Säure | niedrige Viskosität | niedrige Viskosität | niedrige Viskosität |
| 2) + FDCA | nur Oligomere | nur Oligomere | nur Oligomere |

| Komponenten nacheinander umgesetzt | **Vergleichsbeispiel 4** | **Vergleichsbeispiel 5** | **Vergleichsbeispiel 6** |
|---|---|---|---|
| 1) BDO + aliphatische Säure | OH-Zahl: < 1,0 mg KOH / g | OH-Zahl: 2,0 mg KOH / g | niedrige Viskosität |
| 2) + DMe-FDCA | S-Zahl: 0,6 mg KOH / g | S-Zahl: 0,2 mg KOH / g | nur Oligomere |
| | Mn: 26500 g/mol | Mn: 25700 g/mol | |
| | VZ: 97,3 mL/g | VZ: 96,6 mL/g | |

| Komponenten nacheinander umgesetzt | **Vergleichsbeispiel 7** | **Vergleichsbeispiel 8** | **Vergleichsbeispiel 9** |
|---|---|---|---|
| 1) BDO + DMe-FDCA | OH-Zahl: 3,0 mg KOH / g | OH-Zahl: 3,0 mg KOH / g | OH-Zahl: 5,0 mg KOH / g |
| 2) aliphatische Säure | S-Zahl: 4,4 mg KOH / g | S-Zahl: 4,9 mg KOH / g | S-Zahl: 9,6 mg KOH / g |
| | Mn: 21600 g/mol | Mn: 23700 g/mol | Mn: 18800 g/mol |
| | | VZ: 94,2 mL/g | VZ: 72,8 mL/g |

| | | | |
|---|---|---|---|
| Abkürzungen: BDO: 1,4-Butandiol, FDCA: Furandicarbonsäure, DMe-FDCA: 2,5-Dimethylfurandicarboxylat | | | |

## Patentansprüche

1. Verfahren zur Herstellung eines Polyesters, umfassend die Umsetzung
a) einer Furandicarbonsäure-Komponente (A), die mindestens einen Dialkylester einer Furandicarbonsäure umfasst,
b) einer Dicarbonsäure-Komponente (B), die mindestens eine aliphatische Dicarbonsäure oder deren Dialkylester oder deren Anhydrid umfasst,
c) einer Alkohol-Komponente (C), die mindestens 1,4-Butandiol umfasst, sowie
d) einer Katalysator-Komponente (D), umfassend mindestens einen Katalysator,
**dadurch gekennzeichnet, dass**
die Komponenten (A), (B), (C) und (D) gleichzeitig umgesetzt werden.

2. Verfahren zur Herstellung eines Polyesters nach Anspruch 1, **dadurch gekennzeichnet, dass** die Dicarbonsäure-Komponente (B) mindestens eine Dicarbonsäure enthält, bevorzugt besteht die Dicarbonsäure-Komponente (B) aus einer oder mehreren Dicarbonsäuren, besonders bevorzugt aus einer Dicarbonsäure, wobei die Dicarbonsäure-Komponente (B) bevorzugt Bernsteinsäure, Adipinsäure und/oder Sebacinsäure enthält.

3. Verfahren zur Herstellung eines Polyesters nach Anspruch 1, **dadurch gekennzeichnet, dass** die Dicarbonsäure-Komponente (B) mindestens einen Dialkylester enthält, bevorzugt besteht die Dicarbonsäure-Komponente (B) aus einem oder mehreren Dialkylestern, besonders bevorzugt aus einem Dialkylester, wobei die Dicarbonsäure-Komponente (B) bevorzugt Dimethyl- und/oder Diethylester der Bernsteinsäure, Adipinsäure und/oder Sebacinsäure, besonders bevorzugt Dimethyester der Bernsteinsäure, Adipinsäure und/oder Sebacinsäure enthält.

4. Verfahren zur Herstellung eines Polyesters nach Anspruch 1, **dadurch gekennzeichnet, dass** die Dicarbonsäure-Komponente (B) mindestens ein Anhydrid einer Dicarbonsäure enthält, bevorzugt besteht die Dicarbonsäure-Komponente (B) aus einem oder mehreren Anhydriden einer Dicarbonsäure, besonders bevorzugt aus einem Anhydrid einer Dicarbonsäure, wobei die Dicarbonsäure-Komponente (B) bevorzugt Bernsteinsäureanhydrid enthält.

5. Verfahren zur Herstellung eines Polyesters nach einem der Ansprüche 1 bis 4, **dadurch gekennzeichnet, dass** die Furandicarbonsäure-Komponente (A) mindestens einen Dialkylester der 2,5-Furandicarbonsäure enthält, bevorzugt Dimethyl-2,5-furandicarbonsäure und/oder Diethyl-2,5-furandicarbonsäure enthält, besonders bevorzugt Dimethyl-2,5-furandicarbonsäure enthält, ganz besonders bevorzugt aus einem Dialkylester der 2,5-Furandicarbonsäure besteht und insbesondere bevorzugt aus Dimethyl-2,5-furandicarbonsäure besteht.

6. Verfahren zur Herstellung eines Polyesters nach einem der Ansprüche 1 bis 5, **dadurch gekennzeichnet, dass** die Furandicarbonsäure der Komponente (A) mit einwertigen Alkoholen basierend auf 1 bis 14 Kohlenstoffatomen, bevorzugt 1 bis 10 Kohlenstoffatomen, besonders bevorzugt 1 bis 8 Kohlenstoffatomen, ganz besonders bevorzugt 1 bis 5 Kohlenstoffatomen und insbesondere bevorzugt 1 bis 2 Kohlenstoffatomen verestert ist.

7. Verfahren zur Herstellung eines Polyesters nach einem der Ansprüche 1 bis 6, **dadurch gekennzeichnet, dass** die Alkohol-Komponente (C) 99,75 bis 99,95 Gew.-% 1,4-Butandiol und 0,05 bis 0,25 Gew.-% Glycerin, besonders bevorzugt 99,77 bis 99,9 Gew.-% 1,4-Butandiol und 0,1 bis 0,23 Gew.-% Glycerin und insbesondere bevorzugt 99,79 bis 99,82 Gew.-% 1,4-Butandiol und 0,18 bis 0,21 Gew.-% Glycerin bezogen auf das Gesamtgewicht der Alkohol-Komponente (C) enthält.

8. Verfahren zur Herstellung eines Polyesters nach einem der Ansprüche 1 bis 7, **dadurch gekennzeichnet, dass** das Verfahren mindestens einen Destillationsschritt umfasst, wobei bevorzugt während der Umsetzung neben 1,4-Butandiol mindestens ein C1 bis C14 Alkohol, besonders bevorzugt mindestens ein C1 bis C10 Alkohol, ganz besonders bevorzugt mindestens ein C 1 bis C5 Alkohol, insbesondere bevorzugt mindestens ein C1 bis C2 Alkohol und insbesondere besonders bevorzugt Methanol abdestilliert wird.

9. Verfahren zur Herstellung eines Polyesters nach einem der Ansprüche 1 bis 8, **dadurch gekennzeichnet, dass** der Polyester eine Säurezahl von 0 bis 2,5 mg KOH/g, bevorzugt von 0,01 bis 2,4 mg KOH/g, besonders bevorzugt von 0,1 bis 2,3 mg KOH/g, ganz besonders bevorzugt von 0,3 bis 2,2 mg KOH/g und insbesondere bevorzugt von 0,6 bis 2 mg KOH/g aufweist, wobei die Säurezahl wie folgt bestimmt wird: Es werden 1,0 g Probe eingewogen (m) und in 10 ml Toluol und 10 ml Pyridin gelöst; nach Zugabe von 5 ml deionisiertem Wasser und 50 ml Tetrahydrofuran wird mit ethanolischer Kaliumhydroxid-Maßlösung potentiographisch gegen den Wendepunkt titriert (V_{P}); unter den gleichen Bedingungen, nur ohne Prüfgegenstand, wird ein Blindwert titriert (V_{B}); Berechnung: Säurezahl in mg KOH/g = [(V_{P} - V_{B}) ^{∗} c_{KOH} ^{∗} t_{KOH} ^{∗} 56,10 g^{∗}mol⁻¹] : m.

10. Verfahren zur Herstellung eines Polyesters nach einem der Ansprüche 1 bis 9, **dadurch gekennzeichnet, dass** der Polyester eine Hydroxylzahl von >0 bis 50 mg KOH/g, bevorzugt 0,5 bis 30 mg KOH/g, besonders bevorzugt von 1 bis 15 mg KOH/g, ganz besonders bevorzugt von 1,5 bis 10 mg KOH/g und insbesondere bevorzugt von 1,5 bis 6 mg KOH/g aufweist, wobei die Hydroxyzahl wie folgt bestimmt wird: Es werden 1,0 g Probe eingewogen (m) und in 10 ml Toluol gelöst; 9,8 ml Acetylierungsreagenz umfassend 810 ml Pyridin + 100 ml Essigsäureanhydrid + 9 ml Essigsäure werden zugegeben und die Mischung 1 h bei 95 °C gerührt; nach Zugabe von 5 ml deionisiertem Wasser wird die Probe unter Rühren auf 23 °C abgekühlt, mit 50 ml Tetrahydrofuran versetzt und mit 0,5 molarer ethanolischer Kaliumhydroxid-Maßlösung potentiographisch gegen den Wendepunkt titriert (V_{P}); unter den gleichen Bedingungen, nur ohne Prüfgegenstand, wird ein Wirkwert titriert (V_{W}); Berechnung: Hydroxylzahl in mg KOH/g = [(V_{W} - V_{P}) * c_{KOH} ∗ t_{KOH} ∗ 56,10 g∗mol⁻¹] : m.

11. Verfahren zur Herstellung eines Polyesters nach einem der Ansprüche 1 bis 10, **dadurch gekennzeichnet, dass** der in 0,05 g/ml Lösung in Phenol/Dichlorbenzol (1:1) gelöste Polyester eine Viskositätszahl gemäß ISO 1628-5 vom 01.03.1998 von 40 bis 110 mL/g, bevorzugt 50 bis 100 mL/g und besonders bevorzugt 60 bis 90 mL/g aufweist.

12. Verfahren zur Herstellung eines Polyesters nach einem der Ansprüche 1 bis 11, **dadurch gekennzeichnet, dass** der Polyester ein zahlenmittleres Molekulargewicht von 5 000 bis 150 000 g/mol, bevorzugt von 10 000 bis 100 000 g/mol, bevorzugt von 15 000 bis 50 000 g/mol und besonders bevorzugt von 20 000 bis 30 000 g/mol aufweist, wobei das zahlenmittlere Molekulargewicht mit Gelpermeationschromatographie mit PMMA-Standards entsprechend dem in der Beschreibung offenbarten Verfahren ermittelt wird.

13. Polyester, erhältlich durch das Verfahren nach einem der Ansprüche 1 bis 12.

14. Polyester enthaltend
a) eine Furandicarbonsäure-Komponente (A), die mindestens eine Furandicarbonsäure umfasst,
b) eine Dicarbonsäure-Komponente (B), die mindestens eine Dicarbonsäure umfasst, sowie
c) eine Alkohol-Komponente (C), die mindestens 1,4-Butandiol umfasst,
**dadurch gekennzeichnet, dass** der Polyester eine Hydroxylzahl von >0 bis 50 mg KOH/g, bevorzugt 0,5 bis 30 mg KOH/g, besonders bevorzugt im Bereich von 1 bis 15 mg KOH/g, ganz besonders bevorzugt im Bereich von 1,5 bis 10 mg KOH/g und insbesondere bevorzugt im Bereich von 1,5 bis 6 mg KOH/g und eine Säurezahl von 0 bis 2,5 mg KOH/g, bevorzugt von 0,01 bis 2,4 mg KOH/g, besonders bevorzugt von 0,1 bis 2,3 mg KOH/g, ganz besonders bevorzugt von 0,3 bis 2,2 mg KOH/g und insbesondere bevorzugt von 0,6 bis 2 mg KOH/g aufweist, wobei die Hydroxyzahl wie folgt bestimmt wird: Es werden 1,0 g Probe eingewogen (m) und in 10 ml Toluol gelöst; 9,8 ml Acetylierungsreagenz umfassend 810 ml Pyridin + 100 ml Essigsäureanhydrid + 9 ml Essigsäure werden zugegeben und die Mischung 1 h bei 95 °C gerührt; nach Zugabe von 5 ml deionisiertem Wasser wird die Probe unter Rühren auf 23 °C abgekühlt, mit 50 ml Tetrahydrofuran versetzt und mit 0,5 molarer ethanolischer Kaliumhydroxid-Maßlösung potentiographisch gegen den Wendepunkt titriert (V_{P}); unter den gleichen Bedingungen, nur ohne Prüfgegenstand, wird ein Wirkwert titriert (V_{W}); Berechnung: Hydroxylzahl in mg KOH/g = [(V_{W} - V_{P}) * c_{KOH} ∗ t_{KOH} ∗ 56,10 g∗mol⁻¹] : m; und die Säurezahl wie folgt bestimmt wird: Es werden 1,0 g Probe eingewogen (m) und in 10 ml Toluol und 10 ml Pyridin gelöst; nach Zugabe von 5 ml deionisiertem Wasser und 50 ml Tetrahydrofuran wird mit ethanolischer Kaliumhydroxid-Maßlösung potentiographisch gegen den Wendepunkt titriert (V_{P}); unter den gleichen Bedingungen, nur ohne Prüfgegenstand, wird ein Blindwert titriert (V_{B}); Berechnung: Säurezahl in mg KOH/g = [(V_{P} - V_{B}) ^{∗} C_{KOH} ^{∗} t_{KOH} ^{∗} 56,10 g^{∗}mol⁻¹] : m.

15. Verwendung des Polyesters nach Anspruch 13 oder 14 zur Herstellung von Folien, Verpackungen, Behältern, geschäumten Produkten, Fasern oder Verbundstoffen.

16. Verwendung des Polyesters nach Anspruch 13 oder 14 zur Herstellung von Polyurethan.

17. Polyurethan basierend auf mindestens einem Polyester gemäß Anspruch 13 oder 14.

## Claims

1. A process for preparing a polyester, which process comprises reacting
a) a furandicarboxylic acid component (A), which comprises at least one dialkyl ester of a furandicarboxylic acid,
b) a dicarboxylic acid component (B), which comprises at least one aliphatic dicarboxylic acid or the dialkyl ester or anhydride thereof,
c) an alcohol component (C), which comprises at least 1,4-butanediol, and also
d) a catalyst component (D), comprising at least one catalyst,
wherein
the components (A), (B), (C) and (D) are reacted simultaneously.

2. The process for preparing a polyester according to claim 1, wherein the dicarboxylic acid component (B) comprises at least one dicarboxylic acid, the dicarboxylic acid component (B) preferably consists of one or more dicarboxylic acids, particularly preferably of a dicarboxylic acid, wherein the dicarboxylic acid component (B) preferably comprises succinic acid, adipic acid and/or sebacic acid.

3. The process for preparing a polyester according to claim 1, wherein the dicarboxylic acid component (B) comprises at least one dialkyl ester, the dicarboxylic acid component (B) preferably consists of one or more dialkyl esters, particularly preferably of a dialkyl ester, wherein the dicarboxylic acid component (B) preferably comprises dimethyl and/or diethyl esters of succinic acid, adipic acid and/or sebacic acid, particularly preferably dimethyl esters of succinic acid, adipic acid and/or sebacic acid.

4. The process for preparing a polyester according to claim 1, wherein the dicarboxylic acid component (B) comprises at least one anhydride of a dicarboxylic acid, the dicarboxylic acid component (B) preferably consists of one or more anhydrides of a dicarboxylic acid, particularly preferably of an anhydride of a dicarboxylic acid, wherein the dicarboxylic acid component (B) preferably comprises succinic anhydride.

5. The process for preparing a polyester according to any of claims 1 to 4, wherein the furandicarboxylic acid component (A) comprises at least one dialkyl ester of 2,5-furandicarboxylic acid, preferably dimethyl 2,5-furandicarboxylate and/or diethyl 2,5-furandicarboxylate, particularly preferably dimethyl 2,5-furandicarboxylate, very particularly preferably consists of a dialkyl ester of 2,5-furandicarboxylic acid and especially preferably consists of dimethyl 2,5-furandicarboxylate.

6. The process for preparing a polyester according to any of claims 1 to 5, wherein the furandicarboxylic acid of component (A) is in the form of an ester with monohydric alcohols based on 1 to 14 carbon atoms, preferably 1 to 10 carbon atoms, particularly preferably 1 to 8 carbon atoms, very particularly preferably 1 to 5 carbon atoms and especially preferably 1 or 2 carbon atoms.

7. The process for preparing a polyester according to any of claims 1 to 6, wherein the alcohol component (C) comprises from 99.75 to 99.95 wt% of 1,4-butanediol and from 0.05 to 0.25 wt% of glycerol, particularly preferably from 99.77 to 99.9 wt% of 1,4-butanediol and from 0.1 to 0.23 wt% of glycerol and especially preferably from 99.79 to 99.82 wt% of 1,4-butanediol and from 0.18 to 0.21 wt% of glycerol based on the overall weight of alcohol component (C).

8. The process for preparing a polyester according to any of claims 1 to 7, wherein the process comprises at least one distillation step of preferably during the reaction distilling off not only 1,4-butanediol but also at least one C1 to C14 alcohol, particularly preferably at least one C1 to C10 alcohol, very particularly preferably at least one C1 to C5 alcohol, especially preferably at least one C1 to C2 alcohol and especially particularly preferably methanol.

9. The process for preparing a polyester according to any of claims 1 to 8, wherein the polyester has an acid number of 0 to 2.5 mg KOH/g, preferably of 0.01 to 2.4 mg KOH/g, particularly preferably of 0.1 to 2.3 mg KOH/g, very particularly preferably of 0.3 to 2.2 mg KOH/g and especially preferably of 0.6 to 2 mg KOH/g, wherein the acid number is determined as follows: 1.0 g of sample is weighed out (m) and dissolved in 10 ml of toluene and 10 ml of pyridine; admixture with 5 ml of deionized water and 50 ml of tetrahydrofuran is followed by potentiographic titration against standard ethanolic potassium hydroxide solution to the turning point (V_{P}); a blank value (V_{B}) is titrated under the same conditions but without test specimen; calculation: acid number in mg KOH/g = [(V_{P} - V_{B}) ∗ c_{KOH} ∗ t_{KOH} ∗ 56.10 g∗mol⁻¹] : m.

10. The process for preparing a polyester according to any of claims 1 to 9, wherein the polyester has a hydroxyl number of >0 to 50 mg KOH/g, preferably of 0.5 to 30 mg KOH/g particularly preferably of 1 to 15 mg KOH/g, very particularly preferably of 1.5 to 10 mg KOH/g and especially preferably of 1.5 to 6 mg KOH/g, wherein the hydroxyl number is determined as follows: 1.0 g of sample is weighed out (m) and dissolved in 10 ml of toluene; after admixture with 9.8 ml of acetylating reagent comprising 810 ml of pyridine + 100 ml of acetic anhydride + 9 ml of acetic acid the mixture is stirred at 95°C for 1 h; after admixture with 5 ml of deionized water the sample under agitation is cooled down to 23°C, admixed with 50 ml of tetrahydrofuran and potentiographically titrated against 0.5 molar standard ethanolic potassium hydroxide solution to the turning point (V_{P}); a reaction value (V_{W}) is titrated under the same conditions but without test specimen; calculation: hydroxyl number in mg KOH/g = [(V_{W} - V_{P}) ∗ c_{KOH} ∗ t_{KOH} ∗ 56.10 g∗mol⁻¹] : m.

11. The process for preparing a polyester according to any of claims 1 to 10, wherein the polyester when dissolved at 0.05 g/ml solution in phenol/dichlorobenzene (1:1) has a viscosity number according to ISO 1628-5 of March 1, 1998 of 40 to 110 mL/g, preferably 50 to 100 mL/g and particularly preferably 60 to 90 mL/g.

12. The process for preparing a polyester according to any of claims 1 to 11, wherein the polyester has a number average molecular weight of 5 000 to 150 000 g/mol, preferably of 10 000 to 100 000 g/mol, preferably of 15 000 to 50 000 g/mol and particularly preferably of 20 000 to 30 000 g/mol, wherein the number average molecular weight is determined by gel permeation chromatography using PMMA standards according to the method disclosed in the description.

13. A polyester obtainable by the process according to any of claims 1 to 12.

14. A polyester comprising
a) a furandicarboxylic acid component (A), which comprises at least one furandicarboxylic acid,
b) a dicarboxylic acid component (B), which comprises at least one dicarboxylic acid, and also
c) an alcohol component (C), which comprises at least 1,4-butanediol,
wherein the polyester has a hydroxyl number of >0 to 50 mg KOH/g, preferably 0.5 to 30 mg KOH/g, particularly preferably in the range from 1 to 15 mg KOH/g, very particularly preferably in the range from 1.5 to 10 mg KOH/g and especially preferably in the range from 1.5 to 6 mg KOH/g and an acid number of 0 to 2.5 mg KOH/g, preferably of 0.01 to 2.4 mg KOH/g, particularly preferably of 0.1 to 2.3 mg KOH/g, very particularly preferably of 0.3 to 2.2 mg KOH/g and especially preferably of 0.6 to 2 mg KOH/g, wherein the hydroxyl number is determined as follows: 1.0 g of sample is weighed out (m) and dissolved in 10 ml of toluene; after admixture with 9.8 ml of acetylating reagent comprising 810 ml of pyridine + 100 ml of acetic anhydride + 9 ml of acetic acid the mixture is stirred at 95°C for 1 h; after admixture with 5 ml of deionized water the sample under agitation is cooled down to 23°C, admixed with 50 ml of tetrahydrofuran and potentiographically titrated against 0.5 molar standard ethanolic potassium hydroxide solution to the turning point (V_{P}); a reaction value (V_{W}) is titrated under the same conditions but without test specimen; calculation: hydroxyl number in mg KOH/g = [(V_{W} - V_{P}) ∗ c_{KOH} ∗ t_{KOH} ∗ 56.10 g∗mol⁻¹] : m; and the acid number is determined as follows: 1.0 g of sample is weighed out (m) and dissolved in 10 ml of toluene and 10 ml of pyridine; admixture with 5 ml of deionized water and 50 ml of tetrahydrofuran is followed by potentiographic titration against standard ethanolic potassium hydroxide solution to the turning point (V_{P}); a blank value (V_{B}) is titrated under the same conditions but without test specimen; calculation: acid number in mg KOH/g = [(V_{P} - V_{B}) ∗ C_{KOH} ∗ t_{KOH} ∗ 56.10 g∗mol⁻¹] : m

15. The use of the polyester according to claim 13 or 14 in the manufacture of self-supporting film/sheet, packaging, containers, foamed products, fibers or composites.

16. The use of the polyester according to claim 13 or 14 in the manufacture of polyurethane.

17. A polyurethane based on at least one polyester according to claim 13 or 14.

## Revendications

1. Procédé pour la préparation d'un polyester, comprenant la transformation :
a) d'un composant acide furannedicarboxylique (A), qui comprend au moins un ester de dialkyle d'un acide furannedicarboxylique,
b) d'un composant acide dicarboxylique (B), qui comprend au moins un acide dicarboxylique aliphatique ou son ester de dialkyle ou son anhydride,
c) d'un composant alcool (C), qui comprend au moins du 1,4-butanediol, ainsi que
d) d'un composant catalyseur (D), comprenant au moins un catalyseur,
**caractérisé en ce que** les composants (A), (B), (C) et (D) sont transformés simultanément.

2. Procédé pour la préparation d'un polyester selon la revendication 1, **caractérisé en ce que** le composant acide dicarboxylique (B) contient au moins un acide dicarboxylique, de préférence le composant acide dicarboxylique (B) est constitué d'un ou de plusieurs acides dicarboxyliques, de manière particulièrement préférée d'un acide dicarboxylique, le composant acide dicarboxylique (B) contenant de préférence de l'acide succinique, de l'acide adipique et/ou de l'acide sébacique.

3. Procédé pour la préparation d'un polyester selon la revendication 1, **caractérisé en ce que** le composant acide dicarboxylique (B) contient au moins un ester de dialkyle, de préférence le composant acide dicarboxylique (B) est constitué d'un ou de plusieurs esters de dialkyle, de manière particulièrement préférée d'un ester de dialkyle, le composant acide dicarboxylique (B) contenant de préférence de l'ester diméthylique et/ou de l'ester diéthylique de l'acide succinique, de l'acide adipique et/ou de l'acide sébacique, de manière particulièrement préférée l'ester diméthylique de l'acide succinique, de l'acide adipique et/ou de l'acide sébacique.

4. Procédé pour la préparation d'un polyester selon la revendication 1, **caractérisé en ce que** le composant acide dicarboxylique (B) contient au moins un anhydride d'un acide dicarboxylique, de préférence le composant acide dicarboxylique (B) est constitué d'un ou de plusieurs anhydrides d'un acide dicarboxylique, de manière particulièrement préférée d'un anhydride d'un acide dicarboxylique, le composant acide dicarboxylique (B) contenant de préférence de l'anhydride de l'acide succinique.

5. Procédé pour la préparation d'un polyester selon l'une quelconque des revendications 1 à 4, **caractérisé en ce que** le composant acide furannedicarboxylique (A) contient au moins un ester dialkylique de l'acide 2,5-furannedicarboxylique, de préférence l'acide diméthyl-2,5-furannedicarboxylique et/ou l'acide diéthyl-2,5-furannedicarboxylique, de manière particulièrement préférée l'acide diméthyl-2,5-furannedicarboxylique, est constitué de manière particulièrement préférée d'un ester dialkylique de l'acide 2,5-furannedicarboxylique et en particulier de préférence de l'acide diméthyl-2,5-furannedicarboxylique.

6. Procédé pour la préparation d'un polyester selon l'une quelconque des revendications 1 à 5, **caractérisé en ce que** l'acide furannedicarboxylique du composant (A) est estérifié par des alcools monovalents à base de 1 à 14 atomes de carbone, de préférence de 1 à 10 atomes de carbone, de manière particulièrement préférée de 1 à 8 atomes de carbone, de manière tout particulièrement préférée de 1 à 5 atomes de carbone et en particulier de préférence de 1 à 2 atomes de carbone.

7. Procédé pour la préparation d'un polyester selon l'une quelconque des revendications 1 à 6, **caractérisé en ce que** le composant alcool (C) contient 99,75 à 99,95% en poids de 1,4-butanediol et 0, 05 à 0,25% en poids de glycérol, de manière particulièrement préférée 99,77 à 99,9% en poids de 1,4-butanediol et 0,1 à 0,23% en poids de glycérol et en particulier de préférence 99,79 à 99,82% en poids de 1,4-butanediol et 0,18 à 0,21% en poids de glycérol, par rapport au poids total du composant alcool (C).

8. Procédé pour la préparation d'un polyester selon l'une quelconque des revendications 1 à 7, **caractérisé en ce que** le procédé comprend au moins une étape de distillation, au moins un alcool en C1 à C14, de manière particulièrement préférée au moins un alcool en C1 à C10, de manière tout particulièrement préférée au moins un alcool en C1 à C5, en particulier de préférence au moins un alcool en C1 à C2 et en particulier de préférence du méthanol étant éliminé par distillation pendant la transformation, en plus du 1,4-butanediol.

9. Procédé pour la préparation d'un polyester selon l'une quelconque des revendications 1 à 8, **caractérisé en ce que** le polyester présente un indice d'acide de 0 à 2,5 mg de KOH/g, de préférence de 0,01 à 2,4 mg de KOH/g, de manière particulièrement préférée de 0,1 à 2,3 mg de KOH/g, de manière tout particulièrement préférée de 0,3 à 2,2 mg de KOH/g et en particulier de préférence de 0,6 à 2 mg de KOH/g, l'indice d'acide étant déterminé comme suit : on pèse 1,0 g d'échantillon (m) et on le dissout dans 10 ml de toluène et 10 ml de pyridine ; après addition de 5 ml d'eau désionisée et de 50 ml de tétrahydrofuranne, on titre par potentiométrie avec une solution de mesure éthanolique d'hydroxyde de potassium par rapport au point d'inflexion (V_{P}) ; dans les mêmes conditions mais sans échantillon, on titre une valeur à blanc (V_{B}) ; calcul : indice d'acide en mg de KOH/g = [(V_{P}-V_{B}).c_{KOH}.t_{KOH}.56,10 g.mol⁻¹] :m.

10. Procédé pour la préparation d'un polyester selon l'une quelconque des revendications 1 à 9, **caractérisé en ce que** le polyester présente un indice d'hydroxyle de >0 à 50 mg de KOH/g, de préférence de 0,5 à 30 mg de KOH/g, de manière particulièrement préférée de 1 à 15 mg de KOH/g, de manière tout particulièrement préférée de 1,5 à 10 mg de KOH/g et en particulier de préférence de 1,5 à 6 mg de KOH/g, l'indice d'hydroxyle étant déterminé comme suit : on pèse 1,0 g d'échantillon (m) et on le dissout dans 10 ml de toluène ; on ajoute 9,8 ml de réactif d'acétylation comprenant 810 ml de pyridine + 100 ml d'anhydride d'acide acétique + 9 ml d'acide acétique et on agite le mélange pendant 1 h à 95°C ; après addition de 5 ml d'eau désionisée, on refroidit l'échantillon sous agitation à 23°C, on ajoute 50 ml de tétrahydrofuranne et on titre par potentiométrie avec une solution de mesure éthanolique d'hydroxyde de potassium à 0,5 M par rapport au point d'inflexion (V_{P}) ; dans les mêmes conditions mais sans échantillon, on titre une valeur d'efficacité (V_{W}) ; calcul : indice d'hydroxyle en mg de KOH/g = [(V_{W}-V_{P}).c_{KOH}.t_{KOH}.56,10 g.mol⁻¹]:m.

11. Procédé pour la préparation d'un polyester selon l'une quelconque des revendications 1 à 10, **caractérisé en ce que** le polyester dissous dans une solution à 0,05 g/ml dans un mélange phénol/dichlorobenzène (1:1) présente un indice de viscosité selon la norme ISO 1628-5 du 01.03.1998 de 40 à 110 ml/g, de préférence de 50 à 100 ml/g et de manière particulièrement préférée de 60 à 90 ml/g.

12. Procédé pour la préparation d'un polyester selon l'une quelconque des revendications 1 à 11, **caractérisé en ce que** le polyester présente un poids moléculaire moyen en nombre de 5000 à 150.000 g/mole, de préférence de 10.000 à 100.000 g/mole, de préférence de 15.000 à 50.000 g/mole et de manière particulièrement préférée de 20.000 à 30.000 g/mole, le poids moléculaire moyen en nombre étant déterminé par chromatographie par perméation de gel avec un témoin de PMMA selon le procédé divulgué dans la description.

13. Polyester pouvant être obtenu par le procédé selon l'une quelconque des revendications 1 à 12.

14. Polyester contenant
a) un composant acide furannedicarboxylique (A), qui comprend au moins un acide furannedicarboxylique,
b) un composant acide dicarboxylique (B), qui comprend au moins un acide dicarboxylique, ainsi que
c) un composant alcool (C), qui comprend au moins du 1,4-butanediol, **caractérisé en ce que** le polyester présente un indice d'hydroxyle de >0 à 50 mg de KOH/g, de préférence de 0,5 à 30 mg de KOH/g, de manière particulièrement préférée dans la plage de 1 à 15 mg de KOH/g, de manière tout particulièrement préférée dans la plage de 1,5 à 10 mg de KOH/g et en particulier de préférence dans la plage de 1,5 à 6 mg de KOH/g et un indice d'acide de 0 à 2,5 mg de KOH/g, de préférence de 0,01 à 2,4 mg de KOH/g, de manière particulièrement préférée de 0,1 à 2,3 mg de KOH/g, de manière tout particulièrement préférée de 0,3 à 2,2 mg de KOH/g et en particulier de préférence de 0,6 à 2 mg de KOH/g, l'indice d'hydroxyle étant déterminé comme suit : on pèse 1,0 g d'échantillon (m) et on le dissout dans 10 ml de toluène ; on ajoute 9,8 ml de réactif d'acétylation comprenant 810 ml de pyridine + 100 ml d'anhydride d'acide acétique + 9 ml d'acide acétique et on agite le mélange pendant 1 h à 95°C ; après addition de 5 ml d'eau désionisée, on refroidit l'échantillon sous agitation à 23°C, on ajoute 50 ml de tétrahydrofuranne et on titre par potentiométrie avec une solution de mesure éthanolique d'hydroxyde de potassium à 0,5 M par rapport au point d'inflexion (V_{P}) ; dans les mêmes conditions mais sans échantillon, on titre une valeur d'efficacité (V_{W}) ; calcul : indice d'hydroxyle en mg de KOH/g = [(V_{W}-V_{P}).C_{KOH}.t_{KOH}.56,10 g.mol⁻¹]:m ; et l'indice d'acide étant déterminé comme suit : on pèse 1,0 g d'échantillon (m) et on le dissout dans 10 ml de toluène et 10 ml de pyridine ; après addition de 5 ml d'eau désionisée et de 50 ml de tétrahydrofuranne, on titre par potentiométrie avec une solution de mesure éthanolique d'hydroxyde de potassium par rapport au point d'inflexion (V_{P}) ; dans les mêmes conditions mais sans échantillon, on titre une valeur à blanc (V_{B}) ; calcul : indice d'acide en mg de KOH/g = [(VP-VB).C_{KOH}.t_{KOH}.56,010 g.mol⁻¹]:m.

15. Utilisation du polyester selon la revendication 13 ou 14 pour la fabrication de feuilles, d'emballages, de récipients, de produits moussés, de fibres ou de matériaux composites.

16. Utilisation du polyester selon la revendication 13 ou 14 pour la préparation de polyuréthane.

17. Polyuréthane à base d'au moins un polyester selon la revendication 13 ou 14.
